# EUROPEAN PATENT APPLICATION

(11) **EP 4 589 742 A1**
(43) Date of publication of application: **23.07.2025**
(21) Application number: 23864764.8
(22) Date of filing: 14.09.2023
(51) Int. Cl.: H01M 50/202, H01M 50/247, H01M 50/204, H01M 50/242, H01M 50/289, H01M 50/244, H01M 10/613

(54) **BATTERY PACK AND MOWER**

(30) Priority: 16.09.2022 CN 202222464722 U; 16.09.2022 CN 202222463913 U; 16.09.2022 CN 202211133649; 16.09.2022 CN 202222464637 U; 10.10.2022 CN 202211237572
(71) Applicant: Greenworks (Jiangsu) Co., Ltd., Changzhou, Jiangsu 213023 (CN)
(72) Inventor: WANG, Kai, hangzhou, Jiangsu 213023 (CN); ZHOU, Zehuan, hangzhou, Jiangsu 213023 (CN); SUN, Yuan, hangzhou, Jiangsu 213023 (CN); LI, Qiang, hangzhou, Jiangsu 213023 (CN); ZHU, Hua, hangzhou, Jiangsu 213023 (CN); WEI, Qunli, hangzhou, Jiangsu 213023 (CN); XUE, Jiafu, hangzhou, Jiangsu 213023 (CN); ZHUANG, Xian, hangzhou, Jiangsu 213023 (CN); LI, Zhiyuan, hangzhou, Jiangsu 213023 (CN); ZHU, Yanqiang, hangzhou, Jiangsu 213023 (CN); YUE, Anbang, hangzhou, Jiangsu 213023 (CN)
(74) Representative: Bergenstråhle & Partners AB
(86) International application number: PCT/CN2023/118867
(87) International publication number: WO 2024/056034

(57) **Abstract**

A battery pack includes a box, a plurality of battery modules, a cooling passage, an air inlet assembly, an air outlet assembly and a cooling assembly. The plurality of battery modules is arranged at intervals in the box. The cooling passage is formed between the plurality of battery modules arranged at intervals and the box. The air inlet assembly and the air outlet assembly are arranged on the box corresponding to a head and a tail end of the cooling passage, so that outside air flows into the box from an inlet of the air inlet assembly and flows out of the box from an outlet of the air outlet assembly. The cooling assembly is arranged on at least a partial path where air flows between the inlet of the inlet air assembly and the box, and the air flowing in through the inlet of the air inlet is in contact with the cooling assembly.

## Description

### CROSS REFERENCE TO RELATED APPLICATION

The present application is a continuation Application of PCT application No. PCT/CN2023/118867 filed on September 14, 2023, which claims the benefit of CN202222464722.5 filed on September 16, 2022, CN202222463913.X filed on September 16, 2022, CN202211133649.1 filed on September 16, 2022, CN202222464637.9 filed on September 16, 2022, CN202211237572.2 filed on October 10, 2022. All the above are hereby incorporated by reference for all purposes.

### TECHNICAL FIELD

The disclosure belongs to a technical field of mower, and specifically relates to a battery pack and a mower.

### BACKGROUND

Mower is also known as weeding machine, lawn mower, lawn trimmer, etc., the mower is a mechanical tool used to mow lawn, vegetation, etc., it includes a blade disc, an engine, walking wheels, a walking mechanism, a blade, an armrest and a control part. The blade disc is mounted on the walking wheel. The blade disc is provided with the engine, the output shaft of the engine is provided with the blade, and the blade improves the speed a lot through utilizing the high-speed rotation of the engine, which saves the working time of the weeder and reduces a lot of human resources.

The center of gravity of the battery pack of the conventional mower is higher, and since the center of gravity of the battery pack is high and the battery pack of the conventional mower is generally mounted on the rear side of the seat, the center of gravity of the whole mower is unstable.

At the same time, the self-heating of the battery pack is an important factor affecting its life and safety. When the battery pack is charged or discharged, a variety of chemical reactions occur inside the battery to generate heat, which results in a high temperature of the battery pack. If the battery pack works for a long time in an environment where the temperature is higher than the normal operating temperature, it will accelerate the aging process of the battery itself, which shortens its life, and lead to thermal runaway in serious cases. Therefore, it is of great significance to study the active heat dissipation device of the power battery for the safety and duration life of the battery.

In addition, for the battery module in the conventional battery pack, the design mechanism of the end plate is particularly important. The end plate in the conventional battery pack is the die-casting aluminum end plate and the plastic end plate. The design of the end plate of the die-casting aluminum end plate and the plastic end plate is complex, the die-casting aluminum end plate needs a post-processing to deal with burrs, and the injection molding part needs to be put into the steel sleeve to increase the strength, so the cost of the conventional end plate structure is higher, and the conventional battery cell cluster is not firmly fixed, thereby causing the instability of the battery cell.

### SUMMARY

The disclosure provides a battery pack. The battery pack includes a box, a plurality of battery modules, an air inlet assembly, an air outlet assembly and a cooling assembly.

The plurality of battery modules is arranged in the box at intervals.

The cooling passage is formed between the plurality of battery modules arranged at intervals and the box.

The air inlet assembly and the air outlet assembly are arranged on the box corresponding to a head and a tail end of the cooling passage, so as to enable outside air to flow into the box from an inlet of the air inlet assembly and out of the box from an outlet of the air outlet assembly.

The cooling assembly is arranged on at least a partial path where air flows between the inlet of the inlet air assembly and the box, wherein the air flowing in through the inlet of the air inlet assembly is in contact with the cooling assembly.

In an embodiment of the disclosure, the cooling assembly includes a semiconductor refrigeration plate, the semiconductor refrigeration plate is mounted on at least a partial path where air flows between the inlet of the air inlet assembly and the box.

In an embodiment of the disclosure, the cooling assembly further includes a heat sink, an air gap is evenly distributed on the heat sink, and the air gap is at least partially communicated with an internal space of the box, so that air flowing in from the air inlet assembly flows into the box through the air gap.

In an embodiment of the disclosure, a cooling surface of the heat sink covers an outer side of an opening on the box at a junction of the air inlet assembly and the box.

In an embodiment of the disclosure, the heat sink is integrally formed with the semiconductor refrigeration plate or is separately arranged on the semiconductor refrigeration plate by thermal conductive adhesive.

In an embodiment of the disclosure, the heat sink includes a plurality of fins arranged at intervals, the air gap is formed between the adjacent two fins, a distance between the adjacent two fins ranges between 1mm and 2cm, and a thickness of the fins ranges between 0.5mm and 5mm.

In an embodiment of the disclosure, the air inlet assembly includes an air inlet cover mounted on an outer side of the box, a lower end face of the air inlet cover parallel to a bottom surface of the box is configured as an air inlet, an angle is formed between the air inlet and a vertical direction, and a range of the angle ranges between 20° and 80°.

In an embodiment of the disclosure, the air inlet is an inclined surface structure, an upper edge of the inclined surface structure is located below a lower edge of the opening on the box at the junction of the air inlet assembly and the box.

In an embodiment of the disclosure, the angle ranges between 40° and 60°.

In an embodiment of the disclosure, the battery pack further includes a dust-proof net, and the dust-proof net is detachably arranged at the junction of the air inlet assembly and the box.

In an embodiment of the disclosure, the battery pack further includes a temperature monitoring assembly for detecting an internal temperature of the battery pack and a control assembly for controlling an on-off of the cooling assembly and the centrifugal fan, and the control assembly is connected with the temperature monitoring assembly, the cooling assembly and the centrifugal fan respectively.

In an embodiment of the disclosure, the air outlet assembly includes at least one centrifugal fan.

The at least one centrifugal fan is arranged on the box corresponding to the tail end of the cooling passage, and each centrifugal fan acts on at least one cooling passage.

The disclosure further provides a garden tool. The garden tool includes the battery pack in any of the above embodiments, and the battery pack is electrically connected with the garden tool to provide electricity for the garden tool.

The battery pack includes the box, the plurality of battery modules, the cooling passage, the air inlet assembly, the air outlet assembly and the cooling assembly.

The plurality of battery modules is arranged in the box at intervals.

The cooling passage forms between the plurality of battery modules arranged at intervals and the box.

The air inlet assembly and an air outlet assembly are arranged on the box corresponding to a head and a tail end of the cooling passage, so as to enable outside air to flow into the box from the inlet of the air inlet assembly and flow out of the box from an outlet of the air outlet assembly.

The cooling assembly is configured on at least a partial path with air flow between the inlet of the inlet air assembly and the box, and air flowing in through the inlet of the air inlet is in contact with the cooling assembly.

The disclosure further provides a battery pack. The battery pack includes a box and a plurality of battery modules.

The plurality of battery modules is housed in the box, and each of battery modules includes a plurality of non-cylindrical cells which is electrically connected with each other.

A ratio of a center of gravity height of the battery pack to a total height of the battery pack ranges from 40% to 60%.

In an embodiment of the disclosure, a height of the battery pack ranges from 150mm to 250mm.

In an embodiment of the disclosure, an energy density of the battery cell in the battery pack is greater than 185Wh/kg.

In an embodiment of the disclosure, an energy density of the battery pack is greater than 135Wh/kg.

In an embodiment of the disclosure, the non-cylindrical cell is a square aluminum-shell cell, the plurality of the square aluminum-shell cells is transversely or longitudinally housed in the box, and the plurality of square aluminum-shell cells is connected in parallel.

In an embodiment of the disclosure, the non-cylindrical cell is a pouch cell or a blade cell.

In an embodiment of the disclosure, a lip edge is arranged at a position close to a bottom on an outer side of the battery pack, a through hole for mounting a shock-absorbing base is arranged on the lip edge. Wherein, the shock-absorbing base includes a plurality of U-shaped plates and energy-absorbing blocks, the plurality of U-shaped plates is arranged in crisscrossed way, and the energy-absorbing blocks are substantially evenly arranged between the through holes and the U-shaped plates on opposite two sides of the battery pack.

In an embodiment of the disclosure, the energy-absorbing block is arranged in a U-shaped groove of the U-shaped plate, and is fixedly connected with the U-shaped plate. One side of the energy-absorbing block connected with the lip edge is provided with a step surface, and a part of the energy-absorbing block provided with the step surface is located in the through hole.

The disclosure further provides a mower. The mower includes the battery pack in any of the above embodiments, and the battery pack is electrically connected with the mower.

The battery pack is mounted directly below a seat of the mower, and a height of a center of gravity of the battery pack mounted on the mower from the ground ranges from 360mm to 453mm.

In an embodiment of the disclosure, the battery pack further includes a control system. The control system includes a BMS module, a DC/DC module and a key switch.

The BMS module is provided with an on-board switch.

The DC/DC module is connected with the BMS module, wherein the DC/DC module is configured to receive an enabling signal of the battery pack and activate the BMS module based on the enabling signal.

The key switch is connected with the BMS module, the DC/DC module and the battery pack, wherein the key switch includes an OFF end, a START end and an ACC end.

When switched to the START end through a key, the START end is connected with the battery pack, the battery pack provides the enabling signal for the DC/DC module, activates the BMS module through the enabling signal, and closes the on-board switch, and the BMS module controls the battery pack.

When switched to the ACC end through the key, the ACC end is connected with the battery pack, and the BMS module controls the battery pack.

When switched to the OFF end through the key, the on-board switch is disconnected.

In an embodiment of the disclosure, the control system further includes a total positive relay, a charging relay and a total negative relay, the total positive relay and the charging relay are respectively connected with a positive electrode of the battery pack, the total negative relay is connected with a negative electrode of the battery pack, and the BMS module controls the charging and discharging of the battery pack by controlling the total positive relay, the charging relay and the total negative relay.

In an embodiment of the disclosure, the charging relay includes a fast-charging relay and a slow-charging relay, the fast-charging relay and the slow-charging relay are respectively connected with the positive electrode of the battery pack, and the BMS module controls the battery pack to enter fast-charging mode and slow by controlling the opening and closing of the fast-charging relay and the slow-charging relay.

In an embodiment of the disclosure, the control system further includes a heating film and a heating relay, the heating film is arranged on the battery pack, a positive electrode and a negative electrode of the heating film are respectively connected with the positive and negative electrodes of the battery pack, and the heating relay is connected with the positive electrode of the heating film.

In an embodiment of the disclosure, the control system further includes a shunt, the shunt is connected with a negative electrode of the battery pack and the BMS module, and the BMS module controls the opening and closing of the on-board switch based on an output current of the battery pack detected by the shunt.

The disclosure further provides a control method of the battery pack, which includes as follows.

When the key switch is turned to a STRAT gear using the key, the battery pack provides an enable signal to the DC/DC module;

The DC/DC module outputs an activation voltage to the BMS module after receiving the enable signal;

After the BMS module receives the activation voltage, the on-board switch is controlled to be closed, the total positive relay and the total negative relay are controlled to close the main circuit, and a power-on of the BMS module is completed.

The BMS module determines a type of a key and monitors a gear of the key switch in real time.

When the key is a two-gear key and the key switch is in the START gear, the on-board switch is disconnected, and the BMS module controls the battery pack;

When the key is a three-gear key and the key switch is in an ACC gear, the on-board switch is kept being disconnected, and the BMS module controls the battery pack.

In an embodiment of the disclosure, the control method of the battery pack includes as follows. When the key is the three-gear key, a gear of the key switch is monitored in real time.

The on-board switch is disconnected and the BMS module is powered off when a time of a signal from the ACC end not being detected is greater than a first preset time.

In an embodiment of the disclosure, the control method further includes as follows: if the BMS module is unable to determine a type of the key within a second preset time, disconnecting the on-board switch, and powering off the BMS module.

In an embodiment of the disclosure, the control method further includes as follows: the BMS module detecting an output current of the battery pack through the shunt, and if the output current of the battery pack is not detected within a third preset time, disconnecting the on-board switch, and powering off the BMS module.

In an embodiment of the disclosure, the control method further includes as follows: after powering on the BMS module,
the BMS module detects a state of the battery pack.

When the battery pack is in a state of discharging, the BMS module detects remaining power of the battery pack, a cell temperature and a cell voltage of each battery cell.

When the remaining power is greater than or equal to 30%, the cell temperature is less than or equal to a first preset temperature, and the cell voltage is greater than or equal to a first preset voltage, the BMS module controls the heating relay to close, and heats the battery pack while it is discharging.

When the cell temperature is greater than or equal to a second preset temperature, the BMS module controls the heating relay to be disconnected, and the battery pack only discharging.

In an embodiment of the disclosure, the control method further includes: after powering on the BMS module,
the BMS module detecting the state of the battery pack.

When the battery pack is in a state of charging, the BMS module detects the cell temperature and the cell voltage of each battery cell.

When the cell temperature is less than a third preset temperature, and the cell voltage is greater than a second preset voltage, the BMS module controls the heating relay to close and heat.

If all the cell temperatures are between the third preset temperature and a fourth preset temperature, the BMS module controls the charging relay and the heats relay to close, and the battery pack is heated while charging.

If a maximum temperature of the battery pack is greater than or equal to the fourth preset temperature, the BMS module controlling the heating relay to be disconnected, and the battery pack can only be charged.

In an embodiment of the disclosure, the control method further includes: after powering on the BMS module,
the BMS module detecting the state of the battery pack.

When the battery pack is in the state of charging, the BMS module detects power of the battery pack and the cell temperature.

When a current is full, the BMS module controls the battery pack to stop charging and keeping it being powered on.

When the cell temperature is less than a fifth preset temperature, the BMS module controlling the heating relay to be closed, heat and keep warm until the temperature of the battery pack is greater than or equal to the fourth preset temperature, then the BMS module controlling the heating relay to be disconnected and stop heating.

In an embodiment of the disclosure, the battery module includes a battery cell cluster, at least one group of end plates and at least one limiting belt.

The battery cell cluster includes a plurality of battery cells electrically connected with each other, and the plurality of electrically connected battery cells is stacked in a same direction.

Each group of end plates is arranged on two opposite sides of the battery cell cluster and connected with side walls of the battery cell cluster that are in contact with the end plates, and each end plate is configured with at least one limiting part parallel to a top or a bottom of the battery cell cluster.

The at least one limiting belt is arranged around outer sides of the battery cell cluster and the end plate is in contact with the limiting part and supported by the limiting part.

In an embodiment of the disclosure, the end plate is configured with at least one first limiting component and at least one second limiting component, the first limiting component is arranged on the end plate along a transverse direction or a longitudinal direction, the second limiting component and the first limiting component are arranged at intervals, the second limiting component and the first limiting component form the limiting part, and an inclined plane is arranged on one side of the second limiting component away from the first limiting component.

In an embodiment of the disclosure, when the first limiting component and/or the second limiting component is configured as a limiting rib and/or a limiting block,

When the first limiting component and the second limiting component are both configured as limiting ribs, the two limiting ribs are arranged in parallel with each other.

When the first limiting component and the second limiting component are respectively configured as both limiting blocks, and the limiting block of the first limiting component and the limiting block of the second limiting component are arranged in alignment or in dislocation.

The first limiting component and the second limiting component are the limiting block and the limiting rib, the limiting block is arranged at intervals along the transverse direction, and the limiting rib is arranged along the transverse direction or along the longitudinal direction to correspond to the limiting block.

In an embodiment of the disclosure, each end plate is further provided with at least one lifting hole.

In an embodiment of the disclosure, two ends of each end plate are provided with through-type screw holes along a height direction of the battery cell cluster.

In an embodiment of the disclosure, the end plate is an aluminum extruding component, a plurality of reinforcing ribs is arranged in an inner cavity of the end plate.

In an embodiment of the disclosure, the limiting belt is configured as a nylon belt or a steel belt with insulating material arranged on its inner periphery.

The disclosure further provides a battery pack. The battery pack includes a box and a plurality of battery modules.

The plurality of the battery modules is arranged in the box.

The battery module comprises a battery cell cluster, at least one limiting end plate and at least one limiting belt.

The battery cell cluster includes a plurality of battery cells electrically connected with each other. The plurality of electrically connected battery cells is stacked in a same direction.

Each group of end plates is arranged on two opposite sides of the battery cell cluster and connected with side walls of the battery cell cluster in contact with the end plates, and each end plate is provided with at least one limiting part parallel to a top or bottom of the battery cell cluster.

The at least one limiting belt is arranged around outer sides of the battery cell cluster and the end plate is in contact with the limiting part and supported by the limiting.

Wherein, the battery module is connected with the box through the end plate.

The disclosure further provides a mower. The mower includes a battery pack, the battery pack is electrically connected with the mower, and the battery pack includes a box, a plurality of battery modules, an air inlet assembly, an air outlet assembly and a cooling assembly.

The plurality of battery modules is arranged in the box at intervals.

The cooling passage forms between the plurality of battery modules arranged at intervals and the box.

The air inlet assembly and the air outlet assembly are arranged on the box corresponding to a head and a tail end of the cooling passage, so as to enable outside air to flow into the box from the inlet of the air inlet assembly and flow out of the box from an outlet of the air outlet assembly.

The cooling assembly is arranged on at least a partial path with air flow between the inlet of the inlet air assembly and the box, and air flowing in through the inlet of the air inlet assembly is in contact with the cooling assembly.

In an embodiment of the disclosure, a ratio of a center of gravity height of the battery pack to a total height of the battery pack ranges from 40% to 60%.

The disclosure further provides a current-voltage linear control circuit, which includes a current regulation circuit and a voltage regulation circuit.

The current regulation circuit includes a first operational amplifier, a current detection module connected with a positive input end of the first operational amplifier, a reference voltage input module and a first linear voltage input module. The reference voltage input module and the first linear voltage input module are connected with a negative input end of the first operational amplifier. During static operation, an output current of the current regulation circuit is an output current of the reference voltage input module. During dynamic operation, the output current of the current regulation circuit is a sum of an output current of the first linear voltage input module and the output current of the reference voltage input module. The current detection module is used for detecting an output current of an external circuit connected with this current-voltage linear control circuit, and when the output current is detected abnormality, the current regulation circuit enters an overcurrent protection state.

The voltage regulation circuit includes a voltage input end, a voltage output end. A first voltage control module and a second voltage control module connected between the voltage input end and the voltage output end. The first voltage control module and the second voltage control module are connected in parallel with each other to switch between a static state and a dynamic state, and regulate an output voltage of the voltage output end.

In an embodiment of the disclosure, the first linear voltage input module includes a second operational amplifier and a digital-to-analog conversion module connected with a positive input end of the second operational amplifier. The digital-to-analog conversion module is used for converting an input digital signal into an analog voltage signal and transmitting it to the positive input end of the second operational amplifier so as to output a linear voltage.

In an embodiment of the disclosure, a negative input end of the second operational amplifier is connected with its output end to form a negative feedback circuit.

In an embodiment of the disclosure, the output end of the second operational amplifier is connected with a negative input end of the first operational amplifier through a third resistor.

In an embodiment of the disclosure, when the output current of the current regulation circuit reaches a dynamic output maximum value and a current value detected by the current detection module reaches a predetermined threshold value, the current regulation circuit enters a constant current state.

In an embodiment of the disclosure, the current detection module includes a positive detection end and a negative detection end. The positive detection end and the negative detection end are both connected with the external circuit to detect the output current of the external circuit.

In an embodiment of the disclosure, the voltage input end of the voltage regulation circuit is configured to be capable of receiving digital signals.

In an embodiment of the disclosure, the first voltage control module includes a third operational amplifier, a no-load voltage input module connected with a positive input end of the third operational amplifier and a second linear voltage input module connected with a negative input end of the third operational amplifier. During static operation, an output voltage of the first voltage control module is a no-load voltage output of the no-load voltage input module. During dynamic operation, the output voltage of the first voltage control module is inversely proportional to an output voltage of the second linear voltage input module.

In an embodiment of the disclosure, the no-load voltage input module includes a power supply input end connected with an external power supply, a voltage dividing circuit connected with the power supply input end and a fourth resistor connected between the voltage dividing circuit and the positive input end of the third operational amplifier, and a no-load voltage output by the no-load voltage input module is a fixed value.

In an embodiment of the disclosure, the second linear voltage input module is used for converting a received input digital signal into an analog voltage signal and transmitting it to the negative input end of the third operational amplifier.

In an embodiment of the disclosure, an output voltage of the second voltage control module is greater than or equal to an output voltage of the first voltage control module.

The disclosure further provides a charger. The charger includes a current-voltage linear control circuit. The current-voltage linear control circuit includes a current regulation circuit and a voltage regulation circuit.

The current regulation circuit includes a first operational amplifier, a current detection module connected with the positive input end of the first operational amplifier, a reference voltage input module and a first linear voltage input module. The reference voltage input module and the first linear voltage input module are connected with the negative input end of the first operational amplifier. During static operation, the output current of the current regulation circuit is the output current of the reference voltage input module, and when working dynamically, the output current of the current regulation circuit is the sum of an output current of the first linear voltage input module and the output current of the reference voltage input module. The current detection module is used for detecting the output current of the external circuit connected with this current-voltage linear control circuit. During dynamic operation, the current regulation circuit enters the overcurrent protection state.

The voltage regulation circuit includes the voltage input end, the voltage output end. The first voltage control module and the second voltage control module connected between the voltage input end and the voltage output end. The first voltage control module and the second voltage control module are connected in parallel with each other to switch between a static state and the dynamic state, and regulate the output voltage of the voltage output end.

In an embodiment of the disclosure, the first linear voltage input module includes the second operational amplifier and the digital-to-analog conversion module connected with the positive input end of the second operational amplifier. The digital-to-analog conversion module is used for converting the input digital signal into the analog voltage signal and transmitting it to the positive input end of the second operational amplifier so as to output the linear voltage.

In an embodiment of the disclosure, when the output current of the current regulation circuit reaches the dynamic output maximum value and the current value detected by the current detection module reaches the predetermined threshold value, the current regulation circuit enters the constant current state.

In an embodiment of the disclosure, the first voltage control module includes the third operational amplifier, the no-load voltage input module connected with the positive input end of the third operational amplifier and the second linear voltage input module connected with the negative input end of the third operational amplifier. During static operation, the output voltage of the first voltage control module is the no-load voltage output by the no-load voltage input module. During dynamic operation, the output voltage of the first voltage control module is inversely proportional to the output voltage of the second linear voltage input module.

The disclosure provides the air inlet assembly and the air outlet assembly respectively arranged on two opposite sides of the box, and the cooling passage is formed between the two adjacent battery modules in the box, so that cold air penetrates through the battery modules through the cooling passage, which realizes an overall cooling of the battery modules, avoids the situation where some individual batteries do not cool down significantly, thereby avoiding issues of thermal runaway caused by inadequate heat dissipation. A cooling effect on the battery modules is improved by arranging the semiconductor refrigeration plate and a heat dissipation aluminum plate in the air inlet assembly, which effectively saves space, greatly reduces cost, improves its cooling efficiency, and improves a working environment of the battery pack.

In this disclosure, the end plate is designed into an aluminum extruding component, so that the mold cost of the extruding aluminum mold required in this embodiment is only 30% of that of a die-casting aluminum mold and 20% of that of an injection mold, which enables a design of the mold to be simpler, and greatly reduces mold costs, thus making a product to be more advantageous.

The disclosure enables the control system to be compatible with different key switches by changing a connection mode between hardware, which means that one battery pack may be used with different key switches, and also realizes a self-heating function of the battery pack at a low temperature without increasing electrical components, and also enables the control system to automatically trigger a power-off control under when forgetting to close the key, so that the system is completely powered off and realizes a zero power consumption, thereby reducing a risk of power loss of a battery system.

The disclosure enables the battery pack to be compatible with prismatic cells, blade cells with high energy density and pouch cells with high-safety in a solid-state under a same volume, which reduces the center of gravity of the battery pack, and improves the energy density and a volumetric energy density of a system. The shock-absorbing base is arranged at the bottom of the battery pack, which effectively avoids the battery pack being damaged under a long-term turbulence.

The disclosure utilizes the complete current-voltage linear control circuit to regulate the output voltage and output current at the same time, thus in the event that a voltage or current control function fails, a whole circuit will automatically fail, and only an overvoltage protection function will be retained after the failure. At the same time, the output current will be limited to half of a nominal output current, ensuring that even if the output current and voltage cannot be dynamically regulated, certain essential functions are retained to provide a device that can be used in emergency situations.

### BRIEF DESCRIPTION OF THE DRAWINGS

In order to explain technical solutions of embodiments of the disclosure more clearly, the following will briefly introduce drawings used in a description of the embodiments. Obviously, the drawings in the following description are only some embodiments of the disclosure. For those of ordinary skill in the art, other drawings may be obtained based on these drawings without creative work.
FIG. 1 is a perspective view of a battery pack according to an embodiment of the disclosure.
FIG. 2 is a perspective view of an internal structural of the battery pack according to an embodiment of the disclosure.
FIG. 3 is a perspective view of a battery module in the battery pack according to an embodiment of the disclosure.
FIG. 4 is a perspective view of a box in the battery pack according to an embodiment of the disclosure.
FIG. 5 is an exploded view of the battery pack according to an embodiment of the disclosure.
FIG. 6 is a perspective view of an air inlet assembly in the battery pack according to an embodiment of the disclosure.
FIG. 7 is an exploded view of the air inlet assembly in the battery pack according to an embodiment of the disclosure.
FIG. 8 is a perspective view cross-sectional view of the air inlet assembly in the battery pack according to an embodiment of the disclosure.
FIG. 9 is a perspective view of a mower according to an embodiment of the disclosure.
FIG. 10 is an enlarged view of part A in FIG. 9
FIG. 11 is a perspective view of a battery pack in the mower according to an embodiment of the disclosure.
FIG. 12 is a exploded view of the battery pack according to an embodiment of the disclosure.
FIG. 13 is an enlarged view of part B in FIG. 12
FIG. 14 is a perspective view of battery cells distributed transversely in the battery pack according to an embodiment of the disclosure.
FIG. 15 is a perspective view of the battery cells distributed longitudinally in the battery pack according to an embodiment of the disclosure.
FIG. 16 is a perspective view of the battery pack in which the battery cell is a blade cell or a pouch cell according to an embodiment of the disclosure.
FIG. 17 is a perspective view of the battery module according to an embodiment of the disclosure.
FIG. 18 is an exploded view of the battery module according to an embodiment of the disclosure.
FIG. 19 is a perspective view of a CCS assembly in the battery module according to an embodiment of the disclosure.
FIG. 20 is an enlarged view of part C in FIG. 19
FIG. 21 is a perspective view of an end plate in the battery module according to one embodiment of the disclosure.
FIG. 22 is a perspective view of the end plate from another angle according to one embodiment of the disclosure.
FIG. 23 is a perspective view of an end plate in the battery module according to another embodiment of the disclosure.
FIG. 24 is a perspective view of an end plate in the battery module according to another embodiment of the disclosure.
FIG. 25 is a perspective view of an end plate in the battery module according to another embodiment of the disclosure.
FIG. 26 is a functional block diagram of a connection of a key switch with a BMS module and a DC/DC module according to an embodiment of the disclosure.
FIG. 27 is a functional block diagram of the BMS module connected with the battery pack according to an embodiment of the disclosure.
FIG. 28 is a flowchart of a control method of the battery pack according to an embodiment of the disclosure.
FIG. 29 is a structure diagram of a current-voltage linear control circuit of the disclosure.
FIG. 30 is a schematic circuit diagram of a current regulation circuit in the current-voltage linear control circuit of the disclosure.
FIG. 31 is a schematic circuit diagram of a first linear voltage input module in FIG. 30.
FIG. 32 is a schematic circuit diagram of a first voltage control module in the current-voltage linear control circuit of the disclosure.
FIG. 33 is a schematic circuit diagram of a second voltage control module circuit in the current-voltage linear control circuit of the disclosure.

### PART NUMBER DESCRIPTION

100-battery module; 200-battery pack; 10-battery cell cluster; 101-battery cell; 20-end plate; 206-fixing bolt hole; 50-box; 501-cooling passage; 502-internal air inlet; 503-first air outlet; 51-air inlet assembly; 511-air inlet cover; 512-cooling assembly; 5111-external air inlet; 5121-semiconductor refrigeration plate; 5122-fin; 513-dust-proof net; 52-air outlet assembly; 521-centrifugal fan; 522-air outlet cover; 53-box cover; 54-fixing bracket; 1000-mower; 1001-chassis; 1002-walking mechanism; 300-mowing mechanism; 1003-seat base; 1004-pedal; 40-PDU assembly; 531-bent part; 514-lip edge; 515-through hole; 60-shock-absorbing base; 61-U-shaped plate; 62-energy-absorbing block; 612-U-shaped groove; 621-step surface; 102-heat sink; 103-CCS assembly; 1031-fixing groove; 1032-fastener; 1033-flexible cable; 1034-electrode sheet; 104-upper cover; 1041-first limiting part; 201-second limiting part; 202-first limiting component; 203-second limiting component; 2001-limiting rib; 2002-limiting block; 2021-inclined plane; 204-reinforcing rib; 205-lifting hole; 206-fixing screw hole; 207-limiting belt; 2071-insulating sleeve; 208-heating film; 410-BMS module; 420-DC/DC module; 411-on-board switch; 4101-ACC detection port; 4102-first input port; 4103-second input port; 4104-first output port; 4201-enable port; 4202-output port; 4203-voltage input port; 4301-OFF end; 4302-START end; 4303-ACC end; 450-total positive relay; 461-fast-charging relay; 462-slow-charging relay; 470-total negative relay; 480-pre-charge relay; 491-heating film; 492-heating relay; 493-shunt; 494-fuse; 610-current detection module; 620-reference voltage input module; 630-first linear voltage input module; 640-first voltage control module; 650-second voltage control module; 641-no-load voltage input module; 642-second linear voltage input module

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure.

It should be noted that drawings provided in the embodiments are only illustrative of a basic idea of the disclosure. The drawings only show assemblies related to the disclosure instead of drawing according to the number, shape and size of the assemblies in actual implementation. In actual implementation, the type, quantity and ratio of each assembly may be changed at will, and a layout of the assemblies may also be more complicated.

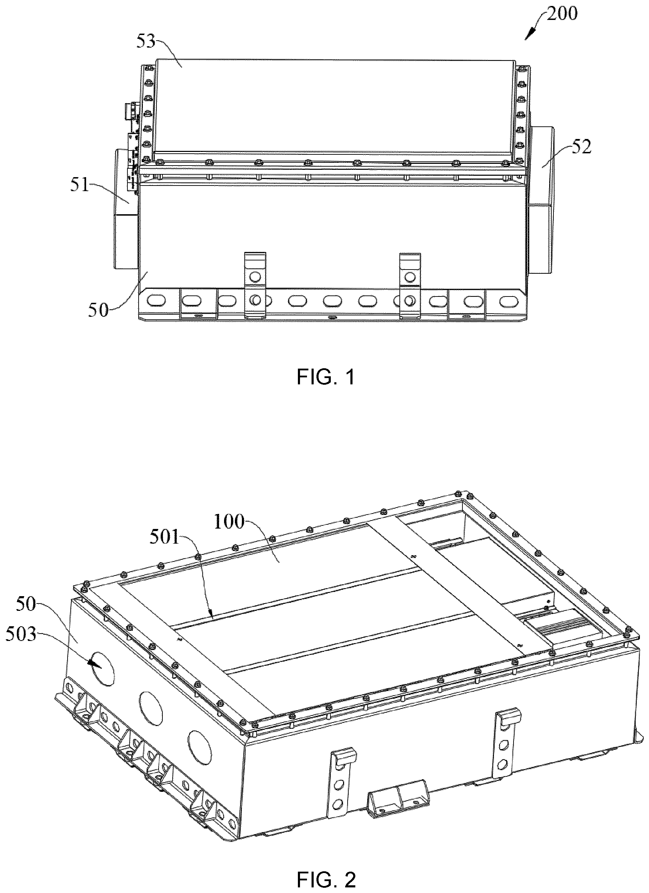

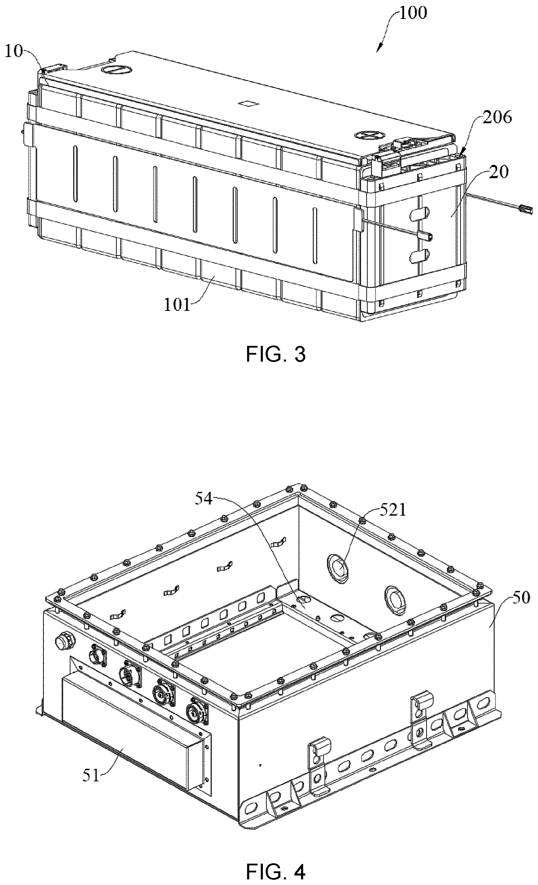

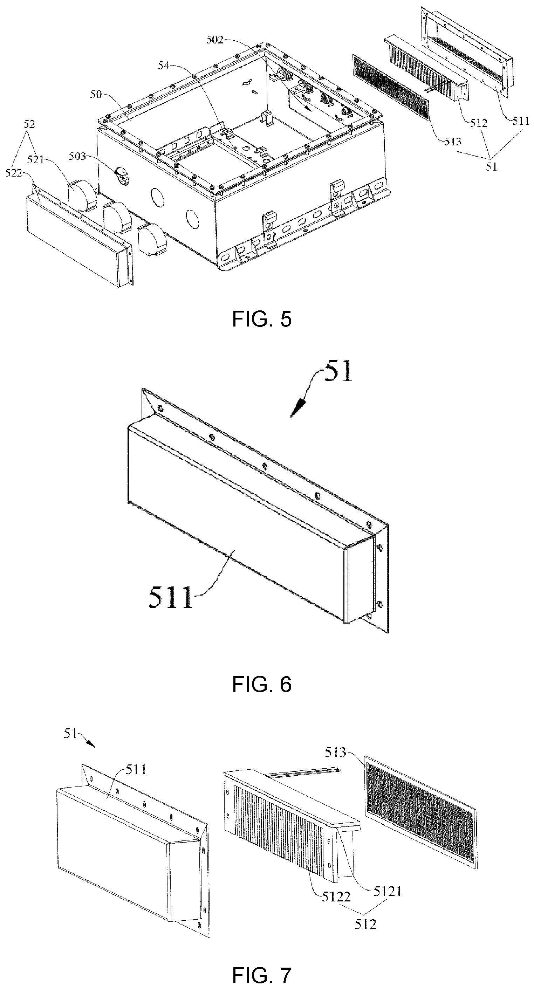

Please refer to FIG. 1 through FIG. 8. The disclosure provides a battery pack 200 to improve a cooling method of conventional batteries where some single battery cells do not cool down significantly, thus failing to achieve a heat dissipation effect and causing thermal runaway problems. In an embodiment, the battery pack 200 includes a battery module 100 and a box 50. An air inlet assembly 51 and an air outlet assembly 52 are respectively arranged on opposite sides of the box 50. Cooling air enters the box 50 from the air inlet assembly 51, flows through each battery module 100, and then is discharged from the air outlet assembly 52, so as to realize a cooling effect to each battery module 100 in the box 50. In this embodiment, a box cover 53 is further arranged above the box 50 to seal and protect the battery modules 100 and related electrical components mounted in the box 50.

Please refer to FIG. 1 through FIG. 3. In this embodiment, the battery module 100 includes a battery cell cluster 10 and an end plate 20, and the end plates 20 are arranged on both sides of the battery cell cluster 10. The battery cell cluster 10 includes a plurality of battery cells 101, and the plurality of battery cells 101 is stacked and connected together in turn. In this embodiment, heat sinks are arranged between the plurality of battery cells 101, and the battery cells 101 are glued together with the heat sink. In an embodiment, the battery cell 101 includes a wide surface and a narrow surface, the wide surface of the battery cell 101 is stacked on top of each other and connected with the heat sinks, and the heat sink can enable the battery cell 101 to quickly dissipate heat so as to avoid a temperature of the battery cell 101 being too high.

Please refer to FIG. 1 through FIG. 4. In this embodiment, two ends of the end plate 20 are further provided with a fixing screw hole 206. In an embodiment, a plurality of fixing brackets 54 is arranged around a bottom surface of an inside of the box 50, and two ends of the end plate 20 along a height direction of the battery cell cluster 10, which means a top surface and a bottom surface of the end plate 20, are provided with a fixing screw hole 206. The fixing bolts are fixedly connected with the fixing frame 54 through the fixing bolts passing through the fixing screw holes 206, so that the battery module 100 is fixedly connected with the box 50 of the battery pack 200. It should be noted that, in this embodiment, a plurality of battery modules 100 is arranged in the box 50, and each battery module 100 is fixedly connected with the fixing screw holes 206 through the bolts to fixedly connect the battery modules 100 with the box 50 of a battery pack 200 together.

Please refer to FIG. 1 and FIG. 2. In this embodiment, the battery pack 200 further includes a cooling passage 501. The cooling passage 501 is formed between the plurality of battery modules 100 arranged at intervals and the box 50. In an embodiment, the battery modules 100 are arranged in the box 50 at intervals to form the cooling passage 501. For example, the cooling passage 501 is formed between the two adjacent battery modules 100 in the box 50, and the cooling passage 501 is likewise formed between the battery modules 100 on both sides and an inner side wall of the box 50, so that cooling air can flow through surrounding areas of the battery module 100. Two ends of the cooling passage 501 are close to an air inlet assembly 51 and an air outlet assembly 52 respectively, which means that the air inlet assembly 51 and the air outlet assembly 52 are arranged on the box 50 corresponding to a head and a tail end of the cooling passage 501, so as to enable outside air to flow into the box 50 from an inlet of the air inlet assembly and flow out of the box 50 from an outlet of the air outlet assembly 52.

Please refer to FIG. 1 through FIG. 5. In this embodiment, an internal air inlet 502 and a first air outlet 503 are respectively arranged on two opposite sides of the box 50, the air inlet assembly 51 is arranged on the box 50 and is located on an outside of the internal air inlet 502, and the air outlet assembly 52 is likewise arranged on the box 50 and is located on an outside of the first air outlet 503.

Please refer to FIG. 1, FIG. 5 through FIG. 8. In this embodiment, the air inlet assembly 51 includes an air inlet cover 511 and a cooling assembly 512. The air inlet cover 511 is arranged on the box 50 and is located on the outside of the inner air inlet 502. The cooling assembly 512 is arranged on at least a part of a path through which air flows between the inlet of the air inlet assembly 51 and the box 50, and the air flowing through the inlet of the air inlet assembly 51 is in contact with the cooling assembly 512. In an embodiment, the cooling assembly 512 is connected with the air inlet cover 511, located on an inside of the air inlet cover 511, and is used for cooling the air that enters the box 50 through the air inlet assembly 51 to improve the cooling effect of the battery module 100.

Please refer to FIG. 1, FIG. 5 through FIG. 8. In this embodiment, an external air inlet 5111 is arranged at a bottom of the air inlet cover 511. The external air inlet 5111 is a grid structure for example, so that debris can be avoided from entering the air inlet assembly 51, and there is an angle between the external air inlet 5111 and a vertical direction. A range of the angle is arranged between 20° and 80° for example, so as to play a function of waterproof splashing. In some embodiments, the range of the angle is arranged between 40° and 60° for example. It should be further noted that the external air inlet 5111 is an inclined surface structure, and an upper edge of the inclined surface structure is located below a lower edge of an opening on the box 50 at a junction of the air inlet assembly and the box 50, which means that there is a certain distance L between the upper edge of the inclined surface structure and the lower edge of the inner air inlet 502, so as to ensure that the air entering the box 50 passes through the cooling assembly 512 in the air inlet assembly 51.

It should be noted that the air inlet cover 511 is detachably mounted with the box 50, for example, through being connected by a fastener or a bolt so that the air inlet assembly 51 may be easily replaced or cleaned.

Please refer to FIG. 1, FIG. 5 through FIG. 8. In this embodiment, the cooling assembly 512 includes a semiconductor refrigeration plate 5121 and the heat sink. The semiconductor refrigeration plate 5121 is mounted on at least a part of a path through which air flow between the inlet of the air inlet assembly 51 and the box 50, and air gaps are substantially evenly distributed on the heat sink. In an embodiment, the heat sink may be selected but not limited to a heat dissipation aluminum sheet. The heat sink includes a plurality of fins 5122 arranged at intervals, the air gap is formed between the two adjacent fins 5122, and the air gap is at least partially communicated with an internal space of the box 50, so that the air flowing from the inlet of the air inlet assembly flows into the box 50 through the air gap and a direction of the air gap is configured to facilitate the air to flow into the box 50 through the air inlet assembly 51, so as to ensure that the air can smoothly enter the box 50, thereby improving cooling efficiency. It should be further noted that a cooling surface of the heat sink covers an outer side of the opening on the box 50 at a junction of the air inlet assembly 51 and the box 50, which means that the cooling surface of the heat sink covers an outer side of the internal air inlet 502 to cool the air entering the box 50.

Please refer to FIG. 1, FIG. 5 through FIG. 8. In this embodiment, the semiconductor refrigeration plate 5121 is fixed on the air inlet cover 511 and is located on an inner side of the air inlet cover 511. A plurality of fins 5122 is arranged on the semiconductor refrigeration plate 5121 at intervals, and the air flow is cooled through the semiconductor refrigeration plate 5121 and the fin 5122 to improve the cooling effect on the battery module 100. It should be noted that, the semiconductor refrigeration plate 5121 and the fins 5122 are integrated structures or the plurality of fins 5122 is separately arranged on the semiconductor refrigeration plate 5121 through a thermally conductive adhesive. A combination of the semiconductor refrigeration plate 5121 and the heat sink may be connected to the air inlet cover through mounting holes on the heat sink, and since the semiconductor refrigeration plate 5121 and the fin 5122 are arranged in the air inlet assembly 51, the cooling effect to the battery module 100 is improved. A space is effectively saved, a cost is greatly reduced, the cooling efficiency is improved, and a working environment of the battery pack is improved.

Please refer to FIG. 1, FIG. 5 through FIG. 8. In this embodiment, a thickness of the fin 5122 ranges between 0.5 mm and 5 mm, and a distance between the two adjacent fins 5122 ranges between 1 mm and 2 cm, so as to avoid a condensate forming tension to block the air inlet due to a too small spacing, and simultaneously increasing a contact area between the fin 5122 and the air as much as possible, so as to improve its cooling effect.

Please refer to FIG. 1, FIG. 5 through FIG. 8. In this embodiment, the air inlet assembly 51 further includes a dust-proof net 513. The dust-proof net 513 is detachably arranged at the junction of the air inlet assembly 51 and the box 50. For example, the dust-proof net 513 is mounted on the box 50, the air inlet cover 511 is sleeved and arranged on an outer side of the dust-proof net 513. In an embodiment, the dust-proof net 513 is detachably mounted on the internal air inlet 502 of the box 50, for example, it is fixedly connected with the box 50 by bolts or a fastener, so as to avoid foreign body from being sucked into an inside of the box 50, and further plays a waterproof splash function.

Please refer to FIG. 1 through FIG. 5. In this embodiment, the air outlet assembly 52 is arranged on one side of the box 50 provided with a first air outlet 503. The air outlet assembly 52 includes at least one centrifugal fan 521, and the centrifugal fan 521 is arranged on the box 50 corresponding to a tail end of the cooling passage 501.Each centrifugal fan 521 acts on at least one cooling passage 501. For example, in this embodiment, the air outlet assembly 52 includes a plurality of centrifugal fans 521, the plurality of centrifugal fans 521 is arranged on the box and is fixedly connected with the box 50, and the centrifugal fan 521 corresponds to the first air outlet 503.

It should be noted that, the centrifugal fan 521 may be arranged on an inner side of the box 50 and may also be arranged on an outer side of the box 50. When the centrifugal fan 521 is arranged on the outer side of the box 50, an air outlet cover 522 may also be arranged on an outer side cover of the centrifugal fan 521, which means that the air outlet cover 522 is arranged on the outer side of the box 50 and covers the outer sides of the plurality of centrifugal fans 521. A bottom of the air outlet cover 522 is provided with an air outlet 5221 to protect the centrifugal fan 521. It should be noted that the air outlet cover 522 is detachably connected with the box 50, so that the air outlet assembly 52 may be easily replaced or cleaned.

Please refer to FIG. 1 through FIG. 5. In this embodiment, a position of the centrifugal fan 521 may be arranged according to a position of the cooling passage 501, which means that each centrifugal fan 521 corresponds to one cooling passage 501, or the centrifugal fans 521 are substantially evenly arranged on one side of the box 50 provided with the first air outlet 503. When the centrifugal fan 521 is started, simultaneously, the cooling assembly 512 in the air inlet assembly 51 is started, and the air enters the inner side of the air inlet cover 511 from the external air inlet 5111 and passes through the cooling assembly 512. The air entering the air inlet cover 511 is cooled through the semiconductor refrigeration plate 5121 and the fin 5122, and the cooled air is brought into the box 50 after the centrifugal fan 521 is started, and then flows out from the second air outlet 5221 after passing through each battery module 100 evenly along each cooling passage 501, so as to realize a cooling of a battery.

It should be noted that, in this embodiment, the battery pack 200 further includes a control assembly and a temperature monitoring assembly. The temperature monitoring assembly is connected with the control assembly, and the control assembly is connected with the control assembly 512 and the centrifugal fan 521 to control an on-off of the control assembly 512 and the centrifugal fan 521. When the temperature monitoring assembly detects that a temperature inside the battery pack 200 is too high, the control assembly controls the semiconductor refrigeration plate 5121 and the centrifugal fan 521 in the cooling assembly 512 to start, so as to realize a cooling treatment of the battery pack 200. When the temperature returns to normal, the control assembly controls the semiconductor refrigeration plate 5121 and the centrifugal fan 521 in the cooling assembly 512 to stop working and complete a cooling process. For example, a temperature threshold is preset in the control assembly, and after the temperature monitoring assembly detects that an internal temperature of the battery pack 200 exceeds the temperature threshold, the control assembly is notified to control the semiconductor refrigeration plate 5121 and the centrifugal fan 521 in the cooling assembly 512 to start, so as to automatically realize the cooling treatment of the battery pack 200. In some embodiments, the centrifugal fan 521 may be started separately, which means that when the temperature in the battery pack 200 is not very high, that is, when the temperature that both need to be started is not reached, the cooling assembly 512 does not need to work, and the battery pack 200 may be cooled down only by simple air cooling. A control program involved in the above-mentioned control assembly is the prior art, and is not repeated here.

In summary, the disclosure provides the air inlet assembly 51 and the air outlet assembly 52 respectively arranged on two opposite sides of the box 50, and the cooling passage 501 is formed between the box 50 and the plurality of the battery modules 100 in the box 50, so that cold air penetrates through the battery modules 100 through the cooling passage 501, which realizes an overall cooling of the battery modules 100, avoids that a cooling of some single batteries is not obvious, thereby avoiding a problem of thermal runaway caused by an inability to achieve a heat dissipation effect.

The disclosure further arranges the semiconductor refrigeration plate 5121 and the fin 5122 in the air inlet assembly 51 to improve the cooling effect of the battery module 100, which effectively saves space, greatly reduces the cost, and improve its cooling efficiency and the working environment of the battery pack.

The disclosure further provides the dust-proof net 513 in the air inlet assembly 51 and arranges the air inlet to have a certain angle with the vertical direction, so that it effectively solves a foreign body inhalation and a water splash protection function.

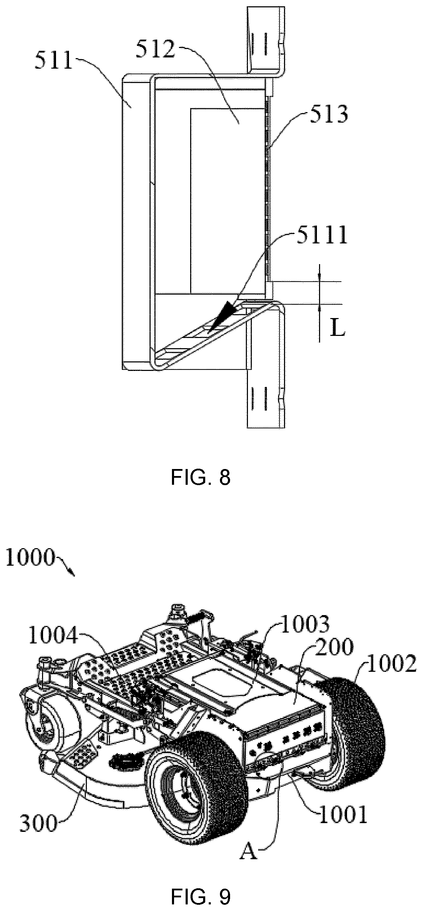

Please refer to FIG. 9. In this disclosure. The plurality of battery modules 100 is housed in the box 50, and each battery module 100 includes a plurality of non-cylindrical cells electrically connected with each other. The non-cylindrical cell is a square aluminum-shell cell, the plurality of the square aluminum-shell cells is transversely or longitudinally housed in the box 50, and the plurality of square aluminum-shell cells is connected in parallel. In other embodiments, the non-cylindrical cell is also a pouch cell or a blade cell. It should be noted that, an energy density of the battery cell 101 is greater than 185Wh/kg, and an energy density of the battery pack 200 is greater than 135Wh/kg. In this embodiment, the battery module 100 is arranged in the box 50 in an orderly manner according to the different battery cells, so that the battery pack 200 may be compatible with prismatic cells, blade cells with high energy density and pouch cells with high-safety in a solid-state under a same volume, and the energy density and a volumetric energy density of a system are improved.

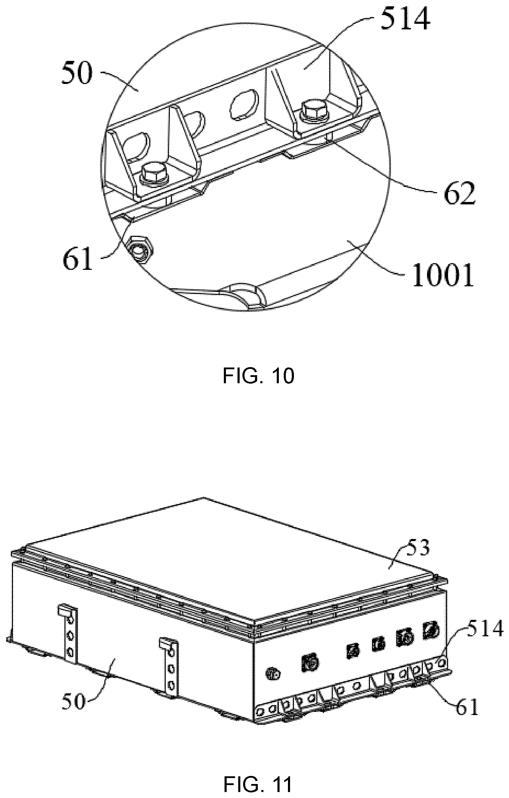

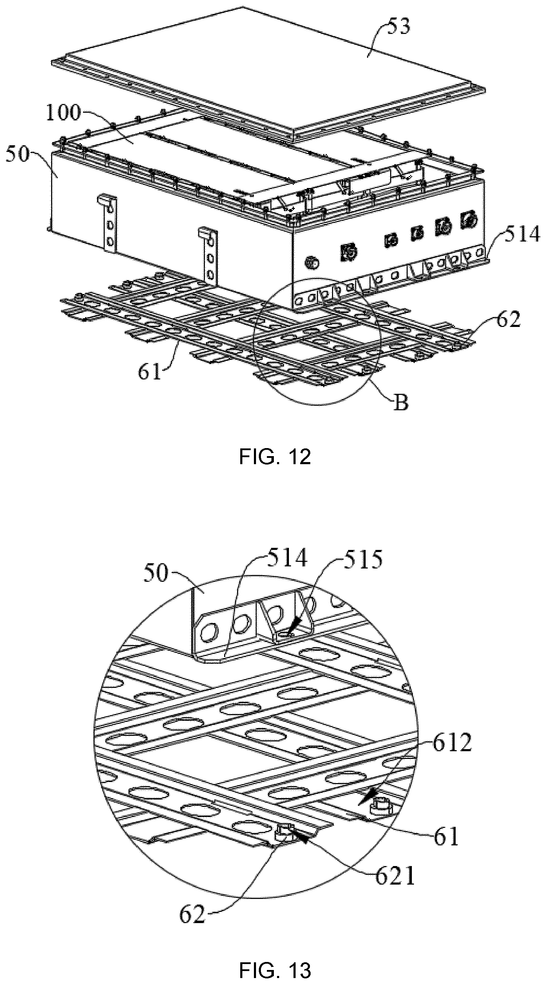

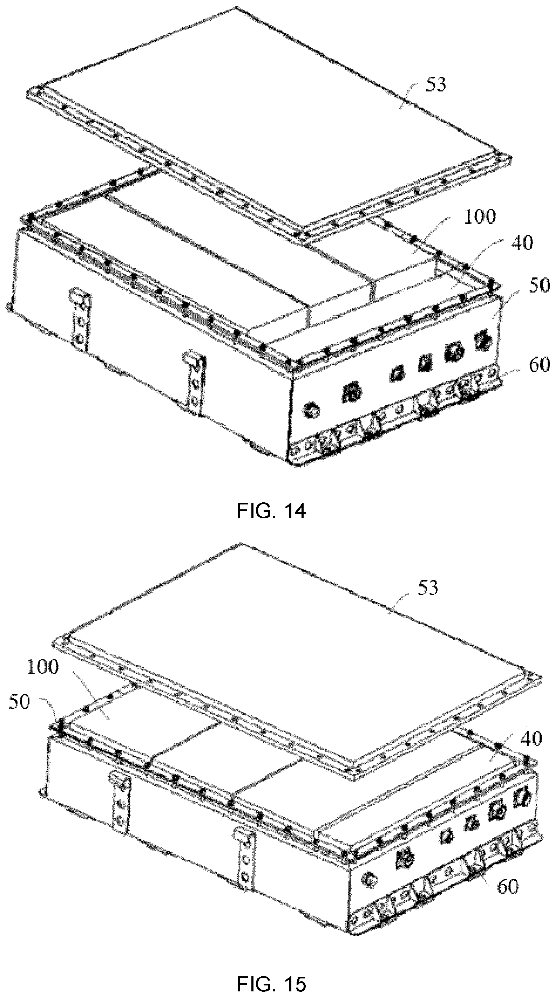

Please refer to FIG. 9 through FIG. 16. In this embodiment, the battery pack 200 further includes the box cover 53, the plurality of battery modules 100 is fixedly mounted in the box 50. The plurality of battery modules 100 may be arranged in the box 50 along a transverse direction or a longitudinal direction of the box 50, and the box cover 53 is fixed above the box 50 to protect the battery modules 100 and a PDU (power distribution unit) assembly 40 inside it.

Please refer to FIG. 9 through FIG. 12. In this embodiment, a ratio of a center of gravity height of the battery pack 200 to a total height of the battery pack 200 ranges from 40% to 60%. Wherein, the height of the battery pack 200 is arranged between 150mm and 250mm for example. The battery pack 200 is located below a seat base 1003, which means that the battery pack 200 is located below a seat of a mower 1000 (not shown). The height of the battery pack 200 is reduced and a mounting position of the battery pack 200 is changed, so that a center of gravity of a whole mower is also greatly reduced, a chassis 1001 of the whole mower is more stable, and a same space adaptability is more excellent. In addition, the battery pack 200 is mounted under the seat, which effectively saves a space of the mower 1000, effectively reduces a size of a chassis 1001 at the same time, enables a structure of the mower 1000 to be more compact, and then reduces a weight of the whole mower.

Please refer to FIG. 9 through FIG. 16. In some other embodiments, due to a height limitation of the battery pack 200, an upward bent part 531 may be arranged on a side of the box cover 53 away from the seat base1003, and an accommodating cavity may be formed between the bent part 531 and the box 50, so that a PCU assembly 44 can be mounted in the accommodating cavity.

Please refer to FIG. 9 through FIG. 13. In this embodiment, a lip edge 514 is arranged at a position close to a bottom on an outer side of the battery pack 200. A through hole 515 for mounting a shock-absorbing base 60 is arranged on the lip edge 514, which means that the shock-absorbing base 60 is further mounted between the battery pack 200 and the chassis 1001, and the battery pack 200 is fixedly connected with the shock-absorbing base 60 and the chassis 1001 through the lip edge 514. For example, the lip edge 514 is arranged on a front side and rear side of the box 50, and the through hole 515 is arranged on a bottom surface of the lip edge 514. The battery pack 200 is fixedly connected with the shock-absorbing base 60 and the chassis 1001 through the bolts passing through the through hole 515.

Please refer to FIG. 9 through FIG. 13. In this embodiment, the shock-absorbing base 60 is arranged at a bottom of the battery pack 200. The shock-absorbing base 60 includes a plurality of U-shaped plates 61 and a plurality of energy-absorbing blocks 62, and the plurality of U-shaped plates 61 is arranged in a crisscross manner. Of course, in some other embodiments, the plurality of U-shaped plates 61 may also be integrated mechanisms. The energy-absorbing blocks 62 are substantially evenly arranged between the through hole 515 and the U-shaped plate 61 on opposite sides of the battery pack 200, which means that the energy-absorbing block 62 is arranged on two sides where the U-shaped plate 61 is connected with the lip edge 514, and two ends of the energy-absorbing block 62 are respectively connected with the U-shaped plate 61 and the lip edge 514, so as to effectively reduce a vibration of the battery pack 200.

Please refer to FIG. 9 through FIG. 13. In this embodiment, the energy-absorbing block 62 is arranged in a U-shaped groove 612 of the U-shaped plate 61, and the energy-absorbing block 62 is fixedly connected with the U-shaped plate 61. For example, the energy-absorbing block 62 may be fixedly connected with the U-shaped plate 61 through welding. In this embodiment, one side of the energy-absorbing block 62 connected with the lip edge 514 is further provided with a step surface 621, and when the energy-absorbing block 62 is connected with the lip edge 514, a part of the energy-absorbing block 62 that is provided with the step surface 621 is located in the through hole 515, which effectively avoids the battery pack being damaged under long-term turbulence. It should be further noted that a through hole is arranged in a middle of the energy-absorbing block 62 so that the bolt passes through the energy-absorbing block 62 and the battery pack 200 is fixedly connected with the shock-absorbing base 60.

Please refer to FIG. 9 through FIG. 16. The disclosure provides the mower 1000 to improve a problem of the battery pack of the conventional mowers with a high center of gravity. Since the center of gravity of the battery pack is higher and a center of gravity of the conventional mower is generally mounted on a rear side of the seat, a center of gravity of the whole mower is unstable. In this embodiment, the mower 1000 includes the chassis 1001, a walking mechanism 1002, a mower 300 and the battery pack 200. The walking mechanism 1002 is mounted on two sides of a bottom of the chassis 1001, for example, the walking mechanism 1002 includes a driving wheel mounted on a rear side of the chassis 1001 and a walking wheel arranged on a front side of the chassis 1001 for driving the mower 1000 to walk. The mower mechanism 300 is arranged in a middle position of the bottom of the chassis 1001 for mowing during a walking of the mower 1000, and the battery pack 200 is mounted on the chassis 1001 and is located on the rear side of the chassis 1001. The battery pack 200 provides a power source for a driving mechanism that drives the walking mechanism 1002 and the mowing mechanism 300.

Please refer to FIG. 9 through FIG. 11. In this embodiment, the seat base 1003 is further arranged on the chassis 1001, the seat base 1003 is used for mounting the seat, and the seat base 1003 is located above the battery pack 200, which means that the battery pack 200 is mounted directly below the seat of the mower 1000, and a height of a center of gravity of the battery pack 200 mounted on the mower 1000 from the ground is from 360mm to 453mm.

Please refer to FIG. 9 through FIG. 11. In this embodiment, a height of the chassis 1001 from the ground is arranged between 150mm and 200mm for example, so that the mower 1000 can adapt to more complex road conditions.

Please refer to FIG. 9 through FIG. 11. In this embodiment, a pedal 1004 is further arranged on the chassis 1001, and the pedal 1004 is located on one side of the battery pack 200. In this embodiment, the pedal 1004 is located on the front side of the chassis 1001, and a vertical distance between the seat base 1003 and the pedal 1004 is between 180mm and 230mm, so as to conform to ergonomics, so that the operator is more comfortable when operating. This disclosure provides the mower 1000. By reducing a height of the battery pack 200 and changing a mounting position of the battery pack 200, the center of gravity of the whole mower 1000 is also greatly reduced, a chassis 1001 of the entire mower 1000 is more stable, and an adaptability to a same space is better. In addition, the battery pack 200 is mounted under the seat, which effectively saves the space of the mower 1000, effectively reduces the size of the chassis 1001 at the same time, enables the structure of the mower 1000 to be more compact, and then reduces the weight of the whole mower 1000.

In this embodiment, the battery pack 200 is compatible with prismatic cells, blade cells with high energy density and pouch cells with high-safety in a solid-state under a same volume, which improves the energy density and a volumetric energy density of a system. And the shock-absorbing base is arranged at the bottom of the battery pack 200, which effectively avoids the battery pack being damaged under a long-term turbulence.

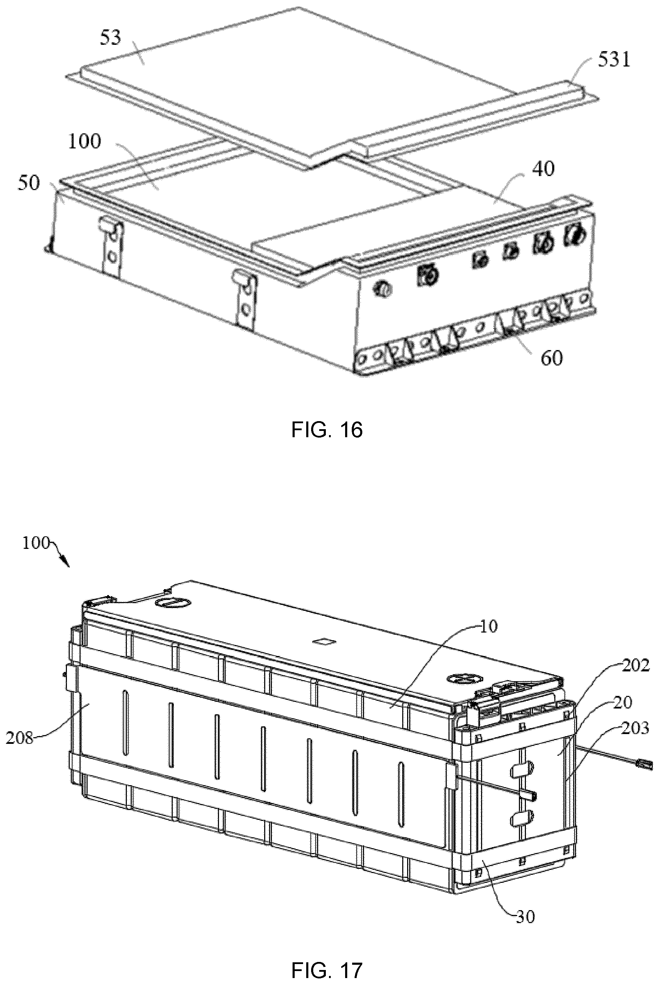

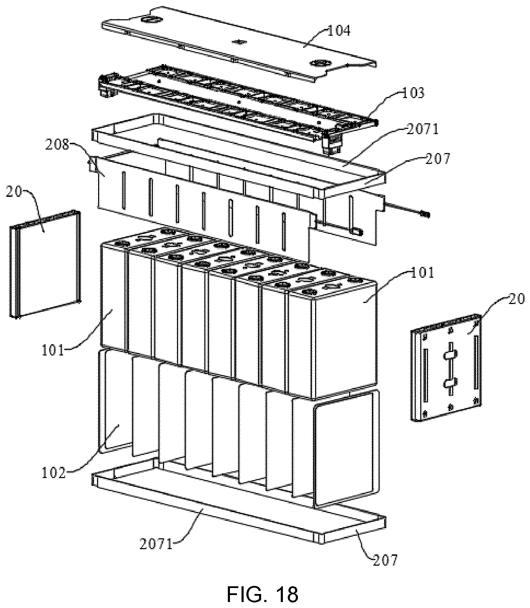

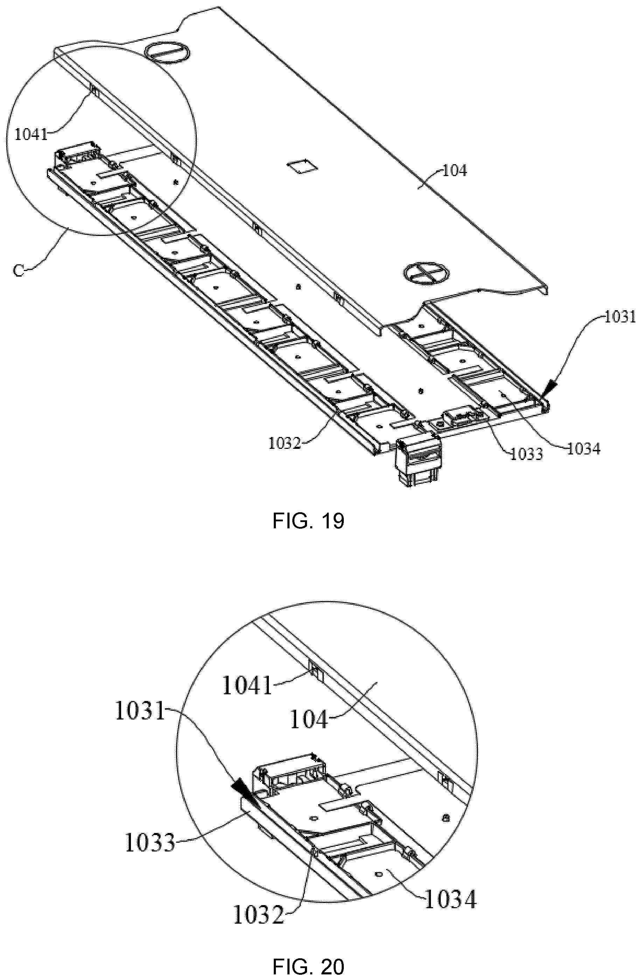

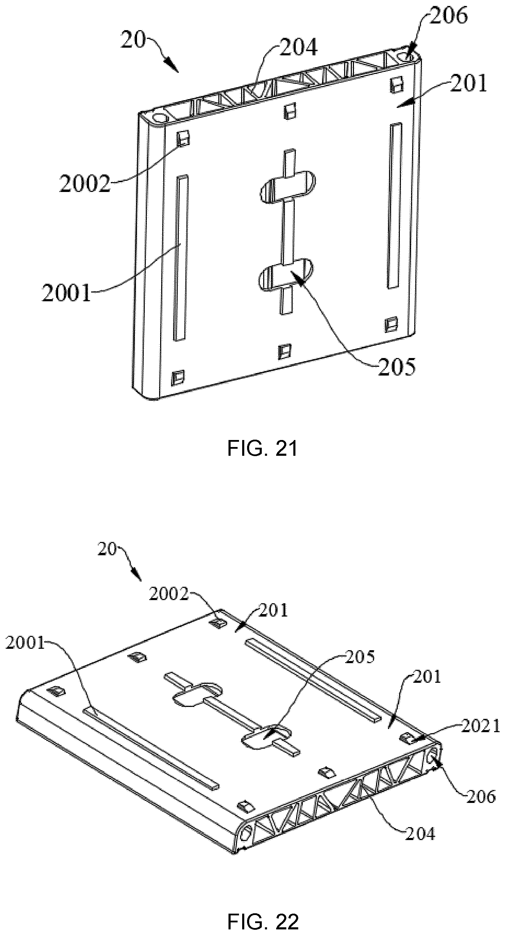

Please refer to FIG. 17 through FIG. 21. In order to improve the end plate in the conventional battery pack that the end plate is a die-casting aluminum end plate and a plastic end plate, a design of the die-casting aluminum end plate and the plastic part is complex, the die-casting aluminum part needs to be post-processed to deal with burrs, and an injection molded part needs to be put into a steel sleeve to increase a strength, so cost of the conventional end plate structure is higher, and a conventional limiting belt or nylon is easy to loosen from the end plate, thereby causing a problem of instability of the battery cell 101. In this embodiment, the battery module 100 includes the battery cell cluster 10, the end plates 20 and the limiting belt 207. The end plates 20 are arranged on both sides of the battery cell cluster 10, and the limiting belt 207 is arranged around outer sides of the battery cell cluster 10 and end plates 20 so as to fix the battery cell cluster 10 and the end plates 20 together.

Please refer to FIG. 17 through FIG. 18. In this embodiment, the battery cell cluster 10 includes the plurality of battery cells 101, the plurality of battery cells 101 is electrically connected with each other, and the plurality of the battery cells 101 is stacked and connected together in sequence, which means that the plurality of the battery cells 101 is stacked in the same direction. In this embodiment, heat sinks 102 are arranged among the plurality of battery cells 101, and the battery cells 101 are glued together with the heat sinks 102. The battery cell 101 includes a wide surface and a narrow surface, the wide surface of the battery cell 101 is stacked on top of each other and connected with the heat sinks 102, and the heat sink 102 can enable the battery cell 101 to quickly dissipate heat so as to avoid a temperature of the battery cell 101 being too high.

Please refer to FIG. 17 through FIG. 18. In this embodiment, a heating film 208 is further arranged on an outer side of the battery cell cluster 10, and the heating film 208 is used for actively heating the battery cell 101 when the temperature is too low, so as to avoid a temperature of the battery cell 101 being too low.

Please refer to FIG. 17 through FIG. 20. In this embodiment, a CCS (Cell Connection System) assembly is further arranged on a top surface of the battery cell cluster 10. A first end of the battery cell 101 provided with an electrode post is set as a top surface, and a second end thereof opposite to the first end provided with the electrode post is arranged as a bottom surface. The CCS assembly 103 is arranged on a top surface of the battery cell 101 close to the electrode post, the plurality of the battery cells 101 is electrically connected together through the CCS assembly 103, and the battery cell cluster 10 further includes an upper cover 104. The upper cover 104 is located above the CCS assembly and fixedly connected with the CCS assembly 103.

Please refer to FIG. 17 through FIG. 20. In this embodiment, fixing grooves 1031 are arranged on both sides of the CCS assembly 103. A plurality of fasteners 1032 is arranged in the fixing grooves 1031. Correspondingly, a plurality of first limiting parts 1041 is arranged on both sides of the upper cover 104, two sides of the upper cover 104 provided with the first limiting parts 1041 are respectively located in the fixing grooves 1031 on both sides of the CCS assembly 103, and the fasteners 1032 are clamped together with the first limiting parts 1041, to fixedly mount the CCS assembly 103 and the upper cover 104 together.

Please refer to FIG. 17 through FIG. 20. In this embodiment, the CCS assembly 103 includes a flexible cable 1033 and a plurality of electrode sheets 1034. The electrode sheets 1034 are used for connecting two adjacent electrode posts on two adjacent battery cells 101s to connect the plurality of battery cells 101 with each other together. The flexible cable 1033 is connected with electrical components in the battery module 100. In this embodiment, the electrode sheets 1034 are mounted on the flexible cable 1033, and the fixing grooves 1031 are arranged on two sides of the flexible cable 1033, so that the flexible cable 1033 is fixed together with the upper cover 104 through clamping the fasteners 1032 with the first limiting parts 1041, which means that the flexible cable 1033 and the plurality of electrode sheets 1034 are fixed through the upper cover 104 to form an integrated form, which improves an integration rate of module components, shortens module manufacturing time, improves production efficiency, and reduces module manufacturing costs. In this embodiment, the upper cover 104 may be a plastic insulating plate. In some other embodiments, the electrode sheet 1034 may be connected with the upper cover 104 by injection molding, and the flexible cable 1033 may be bonded to the upper cover 104, or it may be assembled by other means.

Please refer to FIG. 17 through FIG. 18. In this embodiment, the battery cell cluster 100 includes at least a group of the end plates 20. Each group of the end plates 20 is arranged on two opposite sides of the battery cell cluster 10 and is connected with a side wall of the battery cell cluster 10 in contact. Wherein, each end plate 20 is at least provided with at least one second limiting part 201 parallel to a top or a bottom of the battery cell cluster 10. The end plates 20 are mounted on both sides of the battery cell cluster 10, which means that the end plates 20 are connected together with a wide surface of the battery cells 101, the heat sinks 102 are arranged among the battery cells 101 and the end plates 20, and the end plates 20 are glued together with the heat sinks 102. It should be noted that, in the embodiment, the end plate is an aluminum extruding component, as a mold cost of the aluminum extruded end plates 20 is only 30% of that of a die-casting aluminum mold and 20% of that of an injection mold, which enables a design of the mold to be simpler, at the same time greatly reduces mold costs, and enables a product to be more advantageous.

Please refer to FIG. 17 through FIG. 18. In this embodiment, the plurality of battery cells 101 is mounted together through gluing, and the end plates 20 are similarly mounted on two sides of the battery cell cluster 10 through gluing. At least one limiting belt 207 is arranged around an outer side of the battery cell cluster 10 and the end plate 20, and the limiting belt 207 is clamped into the second limiting part 201 at the end plate 20 and supported by the second limiting part 201, so that the plurality of battery cells 101 and the end plate 20 are fixed together. It should be noted that, in this embodiment, the limiting belt 207 is a nylon belt or a steel belt with an insulating material arranged around an inner periphery. For example, the limiting belt 207 is a stainless steel limiting belt, and an insulating sleeve 2071 is arranged between the stainless steel limiting belt and the plurality of battery cells 101. For example, the insulating sleeve 2071 is arranged between the limiting belt 207 and a narrow surface of the battery 101.

Please refer to FIG. 17, FIG. 21 through FIG. 25. In this embodiment, the second limiting parts 201 are arranged on both sides of the end plate 20 for accommodating the limiting belt 207. In this embodiment, the end plate 20 is configured with at least one first limiting component 202 and at least one second limiting component 203, the first limiting component 202 is arranged on the end plate 20 along the transverse direction or the longitudinal direction, the second limiting component 203 and the first limiting component 202 are arranged at intervals and similarly arranged on the end plate 20 along the transverse direction or the longitudinal direction, so that the second limiting component 203 and the first limiting component 202 form the second limiting part 201, which means that the limiting belt 207 is supported and restricted by a gap between the second limiting component 203 and the first limiting component 202.

Please refer to FIG. 17, FIG. 21 through FIG. 25. In this embodiment, in order to ensure that a force balance of the limiting belt 207 at the end plate 20, the second limiting parts 201 may be arranged at a top and a bottom of the end plate 20. For example, left and right sides of the end plate 20 are provided with the second limiting components 203 arranged along the longitudinal direction and the first limiting component 202 located at at least one end of the second limiting component 203 to ensure the force balance of the limiting belt 207, or the second limiting component 203 is arranged along the longitudinal direction in a middle of the end plate 20, and the first limiting component 202 is arranged at at least one end of the second limiting component 203. At this moment, in order to ensure the force balance of the limiting belt 207, a width of the second limiting component 203 and a width of the first limiting component 202 may be changed according to an actual situation.

Please refer to FIG. 17, FIG. 21 through FIG. 25. In this embodiment, the end plate 20 provided with two first limiting components 202 and two second limiting components 202 is taken as an example, and one first limiting component 202 and one second limiting component 203 are grouped to form one second limiting part 201. The first limiting component 202 and/or the second limiting component 203 are set as a limiting rib 2001 and/or a limiting block 2002.

Please refer to FIG. 17, FIG. 21 and FIG. 22. The first limiting component 202 and the second limiting component 203 are respectively configured as the limiting block 2002 and the limiting rib 2001, the limiting block 2002 is arranged at intervals along the transverse direction, and the limiting rib 2001 is arranged along the transverse direction or along the longitudinal direction to correspond to the limiting block 2002. For example, the first limiting component 202 is a plurality of limiting blocks 2002 transversely arranged along the end plate 20, the second limiting component 203 is the limiting rib 2001 arranged along the longitudinal direction, and each limiting rib 2001 corresponds to at least one limiting block 2002, which means that the second limiting part 201 is formed between the limiting blocks 2002 and the limiting rib 2001.

It should be further noted that, the second limiting component 203 may be the limiting rib 2001 arranged along the longitudinal direction, and one limiting block 2002 is correspondingly arranged at both ends of the second limiting component 203, so that a gap is arranged between the second limiting component 203 and the first limiting component 202 to form the second limiting part 201, which means that the second limiting part 201 is arranged on the end plate 20, so that the limiting belt 207 is completely clamped and not loosened, and the limiting belt 207 used to limit the battery cell cluster 10 may be effectively prevented from coming out of the end plate 20.

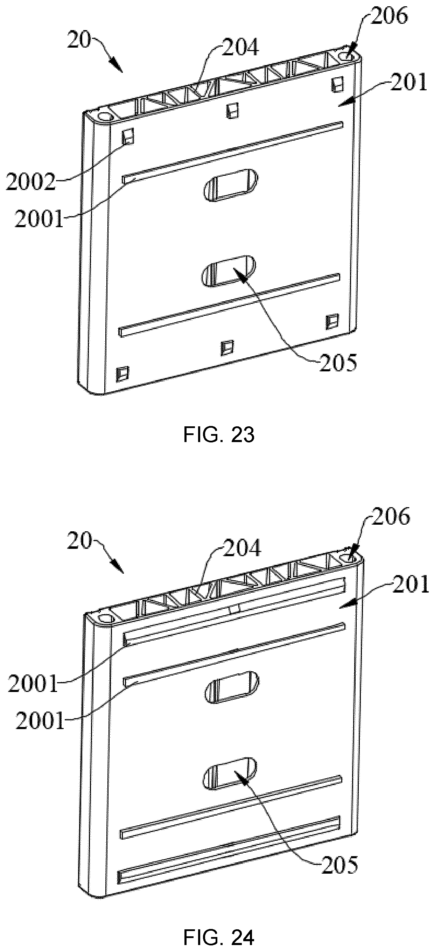

Please refer to FIG. 23. The first limiting component 202 is a plurality of limiting blocks 2002 transversely arranged along the end plate 20, and the plurality of limiting blocks 2002 is arranged at the top and the bottom of the end plate 20 respectively. The second limiting component 203 is the limiting rib 2001 transversely arranged along the end plate 20, located at an inner side of the first limiting component 202, and arranged to parallel to the first limiting component 202, which means that the second limiting part 201 is formed between the limiting blocks 2002 and the limiting rib 2001.

Please refer to FIG. 24. The first limiting component 202 and the second limiting component 203 are both configured as limiting ribs 2001. The two limiting ribs 2001 are arranged to parallel to each other. For example, the first limiting component 202 and the second limiting component 203 are both the limiting ribs 2001 transversely arranged along the end plate 20, the second limiting component 203 is located at the inner side of the first limiting component 202 and arranged to parallel to the first limiting component 202, which means that the second limiting part 201 is formed between the two limiting ribs 2001.

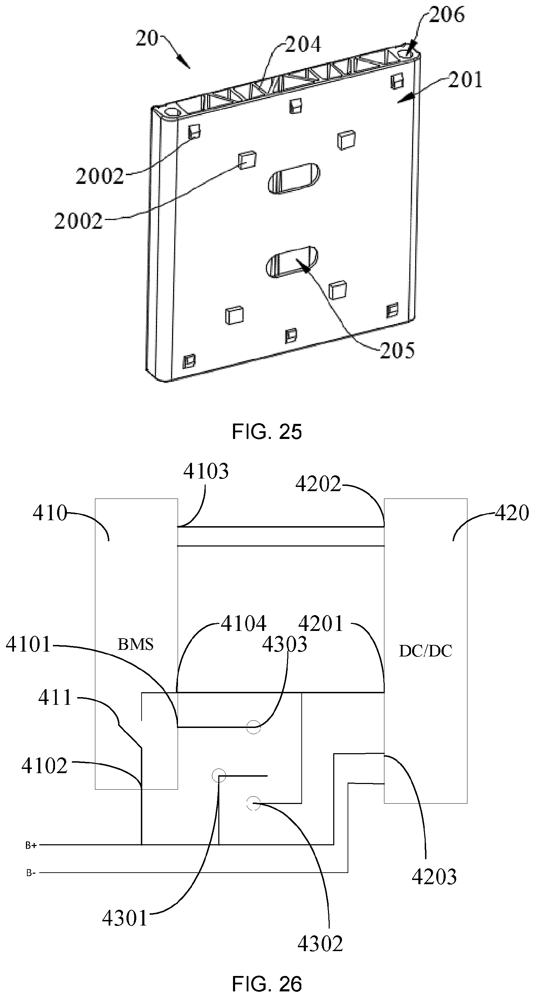

Please refer to FIG. 25. The first limiting component 202 and the second limiting component 203 are both configured as limiting blocks 2002, and the limiting block 2002 of the first limiting component 202 and the limiting block 2002 of the second limiting component 203 may be aligned or dislocated. The gap between the second limiting component 203 and the first limiting component 202 forms the second limiting part 201.

Please refer to FIG. 17, FIG. 21 through FIG. 25. It should be further noted that, an inclined plane 2021 is arranged on one side of the first limiting component 202 away from the second limiting component 203, and the inclined plane 2021 is conducive to the limiting belt 207 being sleeved into the second limiting part 201 when mounting the limiting belt 207.

Please refer to FIG. 17, FIG. 21 through FIG. 25. In this embodiment, a plurality of reinforcing ribs 204 is arranged inside the end plate 20. The plurality of reinforcing ribs 204 is arranged between one side of the end plate 20 connected with the battery cell 101 and one side of the end plate 20 provided with the first limiting component 202, so as to improve a structural strength of the end plate 20.

Please refer to FIG. 17, FIG. 21 through FIG. 25. In this embodiment, a plurality of lifting holes 205 is further arranged on the end plate 20. The lifting holes 205 are arranged on a surface of the end plate 20 provided with the first limiting component 202, so that the battery module 100 may be moved through the lifting holes 205 during a assembly of the modules, so as to facilitate a mounting of the battery module 100.

Please refer to FIG. 2, FIG. 17, FIG. 21 through FIG. 25. The disclosure further provides the battery pack 200. The battery pack 200 includes the box 50 and the battery modules 100 described in above embodiments. The plurality of the battery modules 100 is arranged in the box 50, and the plurality of battery modules 100 is fixedly connected with the box 50 through the end plate 20.

Please refer to FIG. 2, FIG. 17, FIG. 21 through FIG. 25. In this embodiment, two ends of the end plate 20 are further provided with a fixing bolt hole 206. Two ends of the end plate 20 along the height direction of the battery cell cluster 10, which means the top surface and the bottom surface of the end plate 20, are arranged with the fixing bolt hole 206 running through therebetween. The end plate 20 is fixedly connected with the box 50 through the fixing bolt hole 206. It should be noted that, the battery pack 200 may include the plurality of battery modules 100, and each battery module 100 is fixedly connected with the fixing screw holes 206 through the bolts to fixedly connect the battery modules 100 with the box 50 of a battery pack 200 together.

The disclosure provides the battery module 100 and the battery pack 200. The end plate 20 is set as an aluminum extruding component, so that the mold cost of the extruding aluminum mold required in this embodiment is only 30% of that of a die-casting aluminum mold and 20% of that of an injection mold, which enables a design of the mold to be simpler, at the same time greatly reduces mold costs, and enables a product to be more advantageous. In addition, through arranging the limiting part and the first limiting component 202 on the end plate 20, the limiting belt 207 is completely clamped and not loosened, and the limiting belt 207 used to limit the battery cell cluster 10 may be effectively prevented from coming out of the end plate 20.

For a design scheme of a traditional control system of the battery pack 200, different electrical wiring and control strategies need to be developed according to different hardware switches, which means that a two-gear switch uses a two-gear electrical wiring and two-gear control strategy, and a three-gear switch uses a three-gear electrical wiring and three-gear control strategy. And in a case of low temperature, it needs to realize a heating of charging through an external input, and a discharging also needs the external input. And if in a battery control system, the key is turned on and forgotten to be turned off (it may be considered that there is no other operation for a long time), it will only enter a dormant state. In fact, there is still a power consumption. If it takes a long time, it will still cause a problem of power loss of the battery system. This embodiment provides a control system of the battery pack 200 to improve problems in conventional control systems of the battery pack 200.

Please refer to FIG. 26. The control system includes a BMS module 410 (Battery Management System), a DC/DC module 420 and a key switch. Wherein the BMS module 410 is provided with an on-board switch 411, and the DC/ the DC module 420 is connected with the BMS module 410 for receiving an enabling signal of the battery pack 200 and activating the BMS module 410 based on the enabling signal. The key switch is connected with the BMS module 410, the DC/DC module 420 and the battery pack 200.

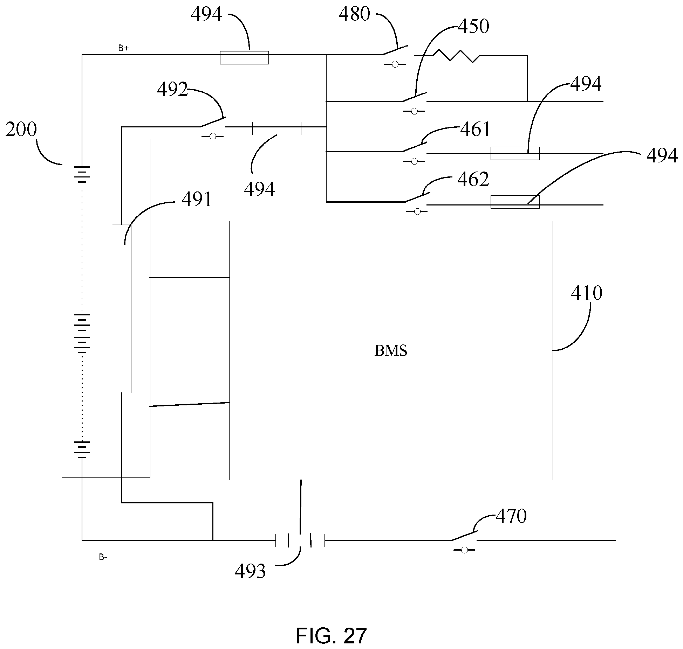

Please refer to FIG. 26 and FIG. 27. In this embodiment, the key switch includes an OFF end 4301, a START end 4302 and an ACC (Adaptive Cruise Control) end 4303. Wherein, the OFF end 4301 is connected with the positive electrode of the battery pack 200. The START end 4302 is connected with an enable port 4201 of the DC/DC module 420. The ACC end 4303 is connected with an ACC detection port 4101 of the BMS module 410. A first input port 4102 of the BMS module 410 is connected with the positive electrode (B+) of the battery pack 200, a second input port 4103 is connected with an output port 4202 of the DC/DC module 420, and the output port 4202 is connected with the enable port 4201 of the DC/DC module 420. The BMS module 410 is further provided with a first output port 4104, and the on-board switch 411 is arranged between the first input port 4102 and the first output port 4104.

Please refer to FIG. 26 and FIG. 27. In this embodiment, when switching to the START end 4302 through a key, the START end 4302 is connected with the battery pack 200. The START end 4302 is connected with the positive terminal of the battery pack 200, which enables the battery pack 200 to provide the enabling signal for the DC/DC module 420, activates the BMS module 410 through the enabling signal, and closes the on-board switch 411. Moreover, the BMS module 410 controls the battery pack 200. When switched to the ACC end 4303 through the key, the ACC end 4303 is connected with the battery pack 200. After the ACC end 4303 is connected with the positive electrode of the battery pack 200, the BMS module 410 controls the battery pack 200. When the key is switched to the OFF end 4301, the on-board switch 411 is disconnected.

Please refer to FIG. 26 and FIG. 27. In this embodiment, the control system further includes a total positive relay 450, a charging relay and a total negative relay 470. The total positive relay 450 is connected with the positive electrode of the battery pack 200 and an external load respectively. The charging relay is connected with the positive electrode of the battery pack 200 and an external power supply respectively. The total negative relay 470 is connected on a negative electrode of the battery pack 200 and is connected with the external load or the external power supply. The BMS module 410 controls the total positive relay 450, the charging relay and the total negative relay 470 to realize a charging/discharging control of the battery pack 200. For example, the total positive relay 450 and the total negative relay 470 is controlled to be closed so that the battery pack 200 provides power to the external load, which means that the battery pack 200 is in a discharging state. The charging relay and the total negative relay 470 is controlled to be closed so that the external power supply charges the battery pack 200, which means that the battery pack 200 is in a charging state.

Please refer to FIG. 26 and FIG. 27. In this embodiment, the charging relay includes a fast-charging relay 461 and a slow-charging relay 462, the fast-charging relay 461 and the slow-charging relay 462 are connected with the positive electrode of the battery pack 200 and the external power supply respectively, and the BMS module 410 controls the battery pack to enter fast-charging mode and slow-charging mode by controlling the opening and closing of the fast-charging relay and the slow-charging relay.. It should be further noted that, the control system further includes a pre-charge relay 480. The pre-charge relay 480 is connected in parallel with the total positive relay 450. When it is an external load function, the pre-charge relay 480 may be controlled to be closed through the BMS module 410, so that after a capacitance in the external load is filled, then the total positive relay 450 is closed, which avoids an excessive instantaneous current of its circuit that may cause the relay to be damaged.

Please refer to FIG. 26 and FIG. 27. In this embodiment, the control system further includes a heating film 491 and a heating relay 492, the heating film 491 is arranged on the battery pack 200, and a positive electrode and a negative electrode of the heating film 491 are respectively connected with the positive and negative electrodes of the battery pack 200, and the heating relay 492 is arranged on the positive electrode of the heating film 491. The heating relay 492 is controlled to be closed through the BMS module 410, so that the heating film 491 heats the battery pack 200.

Please refer to FIG. 26 and FIG. 27. In this embodiment, the control system further includes a shunt 493, the shunt 493 is connected with a negative electrode of the battery pack 200 and the BMS module 410, and the BMS module 410 controls an opening and closing of the on-board switch 411 based on an output current of the battery pack 200 detected by the shunt 493, so that a problem of power loss of a battery system is avoided when the key is turned on, forgotten to be turned off and not in operation for a long time.

It should be further noted that, in this embodiment, a fuse 494 arranged in a discharging, charging and heating circuit of the control system, so that it is used for protecting the circuit and the electrical component in a process of a charging/discharging of the battery pack 200, which avoids damage to the electrical components.

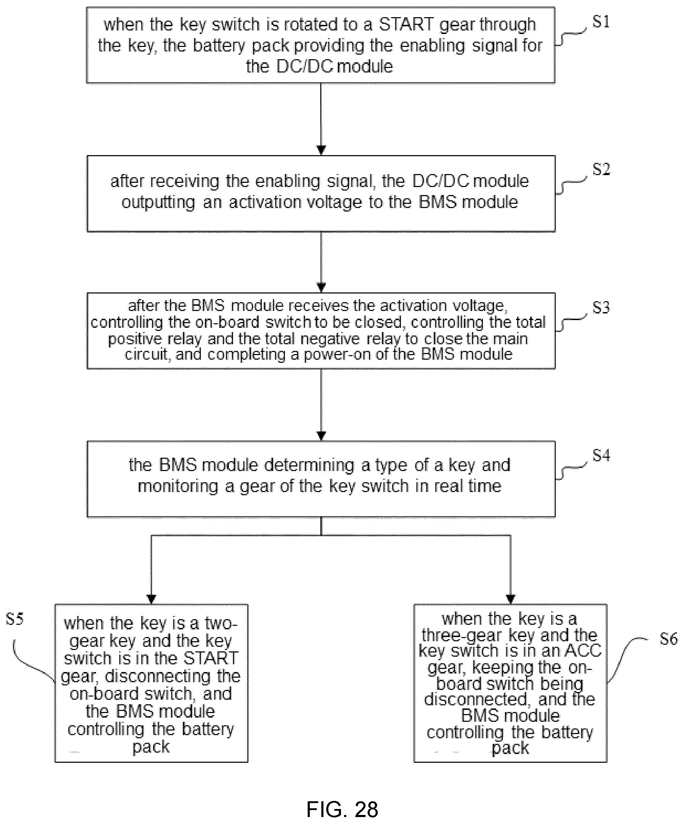

Please refer to FIG. 26 through FIG. 28. The disclosure further provides the control method of the battery pack 200. The control method is applied in the described control system of the battery pack 200 in the above embodiments. In an embodiment, the control method includes as follows:
S1: when the key switch is rotated to a START gear through the key, the battery pack 200 providing the enabling signal for the DC/DC module 420, which means that when the key switch is turned to the START gear through the key, communicating an enabling port 4201 of the DC/DC module 420 with the positive electrode of the battery pack 200, so that the battery pack 200 provides the enabling signal for the DC/DC module 420;
S2: after receiving the enabling signal, the DC/DC module 420 outputting an activation voltage to the BMS module 410, which means that after receiving the enabling signal through the enabling port 4201, the DC/DC module 420 outputting the activation voltage to the BMS module 410 with the activation voltage of 12V; In this embodiment, the DC/DC module 420 is provided with a voltage input port 4203 for connecting the positive and negative electrodes of the battery pack 200, and an input voltage of the battery pack 200 may be converted into a voltage of 12V through the DC/DC module 420;
S3: after the BMS module 410 receives the activation voltage, controlling the on-board switch 411 to be closed, controlling the total positive relay 450 and the total negative relay 470 to be closed in order to close the main circuit, and completing a power-on of the BMS module 410;
S4: the BMS module 410 determining a type of a key and monitoring a gear of the key switch in real time;
S5: when the key is a two-gear key and the key switch is in the START gear, disconnecting the on-board switch 411, and the BMS module 410 controlling the battery pack 200, which means that a charging/discharging process and a heating process of the battery pack 200 may be controlled by the BMS module 410;
S6: when the key is a three-gear key and the key switch is in an ACC gear, keeping the on-board switch 411 being closed, and the BMS module 410 controlling the battery pack 200, which means that the charging/discharging process and heating process of the battery pack 200 may be controlled by the BMS module 410.

In this embodiment, the control system is enabled to be compatible with different key switches by changing a connection mode between hardware, which means to enable the battery pack 200 to be used with different key switches.

Please refer to FIG. 26 through FIG. 28, in this embodiment, the control method further includes as follows: when the key is the three-gear key, monitoring a gear of the key switch in real time.
disconnecting the on-board switch 411 and powering off the BMS module 410 when a time of a signal from the ACC end 433 not being detected is greater than a first preset time, for example 10s.
disconnecting the on-board switch 411 and powering off the BMS module 410 after a signal from the ACC end 4304 is detected and a time of a signal from the ACC end 433 not being detected is greater than a preset threshold (for example 1s).

Please refer to FIG. 26 through FIG. 28. In this embodiment, the control method further includes as follows: if the BMS module 410 is unable to determine a type of the key within a second preset time (for example 10s), disconnecting the on-board switch 411, and powering off the BMS module 410.

Please refer to FIG. 26 through FIG. 28. In this embodiment, after the BMS module 410 is powered on, when the battery pack 200 is in a discharging state, which means that when the BMS module 410 controls the total positive relay 450 and the total negative relay 470 to be connected with the external load, the control method of the battery pack 200 further includes:
using the BMS module 410 for detecting a state of the battery pack 200 and controlling an on-off of the heating relay according to the state of the battery pack 200, so as to realize a heating function of the battery pack 200.

In an embodiment, the BMS module 410 detecting remaining power of the battery pack 200, a cell temperature and a cell voltage of each battery cel 101I;
when the remaining power is greater than or equal to 30%, the cell temperature is less than or equal to a first preset temperature, for example 10°C, and the cell voltage is greater than or equal to a first preset voltage, for example 3.15V, the BMS module 410 controlling the heating relay 492 to be closed, and heating the battery pack 200 while it is discharging;
when the cell temperature is greater than or equal to a second preset temperature, for example 15°C, the BMS module 410 controlling the heating relay 492 to be disconnected, and the battery pack 200 only discharging.

In this embodiment, a self-heating function of the battery pack 200 at low temperatures is realized without adding any electrical components.

Please refer to FIG. 26 through FIG. 28. In this embodiment, after the BMS module 410 is powered on, when the battery pack 200 is in a charging state, which means that when the BMS module 410 controls the fast-charging relay 461 or the slow-charging relay 462 to be closed, and controls the total negative relay 470 to be closed, so as to be connected with the external load, the control method of the battery pack 200 further includes:
the BMS module 410 detecting the state of the battery pack 200 and controlling on-off of the heating relay 492 and the charging relay according to the state of the battery pack 200, so as to realize a heating and charging function of the battery pack 200.

In an embodiment, the BMS module 410 detecting the cell temperature and a cell voltage of each battery cell 101 of the battery pack 200;
wherein, when the cell temperature is less than a third preset temperature (for example 5°C), and the cell voltage is greater than a second preset voltage (for example 2.5V), the BMS module 410 controlling the heating relay 492 to close and heat;
when all the cell temperatures are between the third preset temperature (for example 5°C) and a fourth preset temperature (for example 25°C), the BMS module 410 controlling the charging relay and the heating relay 492 to close, and heating the battery pack 200 while charging;
when a maximum temperature of the battery pack 200 is greater than or equal to the fourth preset temperature (for example 25°C), the BMS module 410 controlling the heating relay 492 to be disconnected, and the battery pack 200 can only be charged.

Please refer to FIG. 26 through FIG. 28. In this embodiment, after the BMS module 410 is powered on, when the battery pack 200 is in the charging state, which means that when the BMS module 410 controls the fast-charging relay 461 or the slow-charging relay 462 to be closed and closes the total negative relay 470, so as to be connected with the external load, the control method of the battery pack 200 further includes:
the BMS module 410 detecting the state of the battery pack 200 and controlling on-off of the heating relay 492 and the charging relay according to the state of the battery pack 200, so as to realize a heating and charging function of the battery pack 200. The BMS module 410 detecting a power of the battery pack 200 and the cell temperature of each battery cell 101, wherein:
when a current is full, the BMS module 410 controlling the battery pack 200 to stop charging and keeping it being powered on;
when the cell temperature is less than a fifth preset temperature (for example 10°C), the BMS module 410 controlling the heating relay 492 to be closed, heat and keep warm until the temperature of the battery pack 200 is greater than or equal to the fourth preset temperature (for example 25°C), then the BMS module 410 controlling the heating relay 492 to be disconnected and stop heating;
which means that when the battery pack 200 is charged, after the battery pack 200 is fully charged, the BMS module 410 starting a process of keeping the battery pack 200 warm to keep the battery pack 200 at the best performance.

Please refer to FIG. 26 through FIG. 28. In this embodiment, the control method further includes as follows: the BMS module 410 detecting an output current of the battery pack 200 through the shunt 493, and if the output current of the battery pack 200 is not detected within a third preset time, disconnecting the on-board switch 411, and powering off the BMS module 410.

The disclosure in this embodiment enables the control system to automatically trigger a power-off control under when forgetting to close the key, so that the system is completely powered off and realizes a zero power consumption, thereby reducing a risk of power loss of a battery system.

In summary, the disclosure enables the control system to be compatible with different key switches by changing a connection mode between hardware, which means that one battery pack 200 may be used with different key switches, and also realizes a self-heating function of the battery pack 200 at a low temperature without increasing electrical components, and also enables the control system to automatically trigger a power-off control under when forgetting to close the key, so that the system is completely powered off and realizes a zero power consumption, thereby reducing a risk of power loss of a battery system.

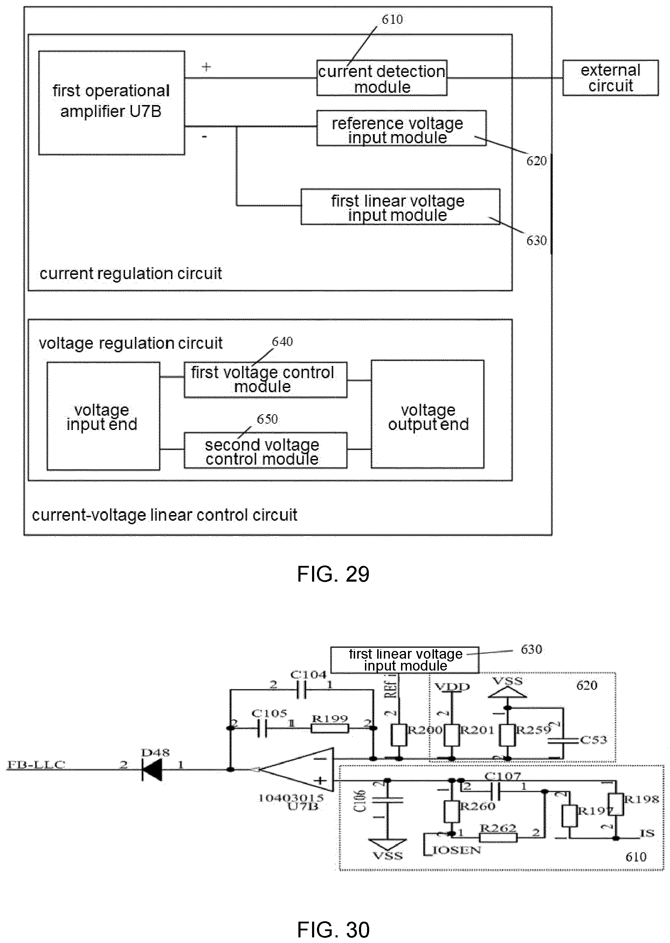

Please refer to FIG. 29. The disclosure further provides a mower. The mower includes the battery pack 200 in any of the above embodiments, and the battery pack 200 is electrically connected with the mower to supply power for the mower.

Please refer to FIG. 29. The disclosure further provides a mower system. The mower system includes the battery pack 200, the mower and the charger described in the above embodiments. The battery pack 200 is mounted on the mower and is electrically connected with the mower. The charger is electrically connectable with the battery pack 200 to charge the battery pack 200. Wherein, the charger includes a current-voltage linear control circuit to solve a problem that a conventional output voltage-current control circuit has overcurrent and overvoltage protection circuits in a bypass state when working alone and when the system is abnormal, a protection circuit responds slowly and cannot be switched to system timely, which may cause abnormal damage to the product, and solve a problem that a conventional current control, voltage control and protection circuits are all designed independently, and each of them works independently, which results in a more complex circuit system, higher cost, and slow circuit response speed.

Please refer to FIG. 29. The current-voltage linear control circuit uses an operational amplifier and a comparator as the basis, and uses a control mode of an external circuit design and multiple signal input, so that multiple control signals may be input at the same time in the control module circuit of a same signal input, a feedback control signal may be output to a power supply main control circuit according to a sequence of input signals, and a fixed mode of a feedback control circuit may also be formed through a hardware external parameter configuration.

The current-voltage linear control circuit includes a current regulation circuit and a voltage regulation circuit. Wherein, the current regulation circuit can realize functions of over-current protection, output current control and constant current control, and the voltage regulation circuit can realize functions of over-voltage protection and output voltage control, so that the current-voltage linear control circuit of the disclosure can simultaneously realize at least 5 functions such as over-voltage protection, over-current protection, output current control, output voltage control and constant current control, which can be applied to various high-power power charger products, such as, vacuum cleaner chargers, electric mop chargers, sweeping robot chargers, garden tool chargers, power tool charger products, home smart charging stations, new energy vehicle chargers, etc. Therefore, the disclosure also protects a charger of the current-voltage linear control circuit at the same time.

In addition, the current-voltage linear control circuit of the disclosure further allows an input of an external digital signal, and the input digital signal will be converted into a linear control signal of an output voltage and current, and at this time, original five control signals (including an overcurrent protection signal, an overvoltage protection signal, a constant current control signal, a no-load voltage signal, etc.) are divided into two parts and converted into two-level signals (current control signal and voltage control signal) for protection, and are switched into work at any time. In a case of a maximum load power output of a product, the input digital signal and the original 5 control signals coexist, all of them are in a threshold setting trigger state, so that if a dynamic linear output control suddenly fails, the original 5 control signals will immediately be switched into the circuit and start working, which improves a reliability of the circuit and a timeliness of circuit protection control.

The current-voltage linear control circuit of the disclosure may perform both dynamic control and static control in a case of multiple signal input, and when the dynamic control signal and the static control signal coincide simultaneously, a same control effect may be produced to a same target. When one of the input signals changes, the control effect of the other input signal remains unchanged and is converted into a second-level control signal, the changed input signal is converted into a first-level control signal. When working, one of the input signals is converted to a dynamic linear regulation signal, and the other input signal is converted to a maximum output limiting signal.

The current-voltage linear control circuit of the disclosure will be described in detail below with reference to FIG. 29 through FIG. 33.

Please refer to FIG. 29 through FIG. 31. The current regulation circuit includes a first operational amplifier U7B, a current detection module 610 connected with a positive input end of the first operational amplifier U7B, and a reference voltage input module 620 and a first linear voltage input module 630 connected with a negative input end of the first operational amplifier U7B. When working statically, an output current of the current regulation circuit is an output current of reference voltage input module 620. When working dynamically, the output current of the current regulation circuit is a sum of an output current of the first linear voltage input module 630 and the output current of reference voltage input module 620. That is to say, with an addition of the first linear voltage input module 630, the output current of the current regulation circuit increases linearly.

The reference voltage input module 620 includes a first resistor R201, a second resistor R259 and a first capacitor C53. A first end of the first resistor R201 is connected with an external power supply VDD, and a second end of the first resistor R201 is connected with a negative input end of first operational amplifier U7B. A first end of the second resistor R259 is grounded VSS, a second end of the second resistor R259 is connected with the negative input end of first operational amplifier U7B, and the first capacitor C53 is connected in parallel with the second resistor R259. In some embodiments, the external power supply VDD may be either 5V or 12V, which is not limited here.

The first linear voltage input module 630 includes a second operational amplifier U7C and a digital-to-analog conversion module connected with a positive input end of the second operational amplifier U7C. The digital-to-analog conversion module is used for converting an input digital signal IPWM into an analog voltage signal and transmitting it to the positive input end of the second operational amplifier U7C so as to output a linear voltage. In an embodiment, the digital-to-analog conversion module includes a resistor R176, a resistor R177 and a resistor R182 connected with a positive input of the second operational amplifier U7C. Wherein the digital signal IPWM input from one side of the resistor R182 has been converted into an analog voltage signal when it reaches the positive input of the second operational amplifier U7C.

The positive input end of the second operational amplifier U7C is further connected with a resistor R186, a capacitor C91, a capacitor C92 and a capacitor C93. Wherein, the other end of the resistor R186 is grounded, and the capacitor C91 is connected in parallel with the resistor R186. A first end of the capacitor C92 is connected between the resistor R176 and the resistor R177, and a second end of the capacitor C92 is grounded. A first end of the capacitor C93 is connected between resistor R177 and the resistor R182, and a second end of the capacitor C93 is grounded. Arrangements of the resistor R186, the resistor R176, the resistor R177, and the resistor R182, as well as the capacitor C91, the capacitor C92, and the capacitor C93, may be used to calculate or adjust a linear voltage output by the second operational amplifier U7C.

A negative input end of the second operational amplifier U7C is connected with its output end to form a negative feedback circuit. At the same time, the output end of the second operational amplifier U7C is connected with a negative input end of the first operational amplifier U7B through a third resistor R200.

That is to say, as an auxiliary circuit, the second operational amplifier U7C mainly realizes a function of converting the digital signal IPWM input by the resistor R182 to control the dynamic current regulation into an analog voltage signal, and the analog voltage signal is then output by an REf port to the resistor R200 in a circuit of the first operational amplifier U7B, and finally to the first operational amplifier U7B.

In other words, the negative input end (-port) of the first operational amplifier U7B generates a reference voltage signal from an input VDD signal through an external first resistor R201 and a second resistor R259. When the circuit is working statically, an output state of an output end FB-LLC of the current regulation circuit depends on a reference of the first resistor R201 and the second resistor R259, and this value is unchanged. When an input signal of the Ref end changes, a reference signal of a negative input end (-port) of the first operational amplifier U7B changes, an output of an output end FB-LLC of the current regulation circuit also changes, and a dynamic regulation function of the output current is completed.

In addition, the negative input end and the output end of the first operational amplifier U7B are also connected with each other by a capacitor C104, a capacitor C105 and a resistor R199. Wherein, the capacitor C105 and the resistor R199 are connected in series between the negative input end and the output end, and the capacitor C104 is connected in parallel with the capacitor C105 and the resistor R199. The output end of the first operational amplifier U7B is further connected with a diode D48 to prevent a current reflow at the output end FB-LLC, which plays a role in protecting the first operational amplifier U7B.

The current detection module 610 is used for detecting an output current of an external circuit connected with the current-voltage linear control circuit, and when the output current is detected abnormal, the current regulation circuit enters an overcurrent protection state. The current detection module 610 includes a positive detection end IS and a negative detection end IOSEN, and the positive detection end IS and the negative detection end IOSEN are both connected with the external circuit to detect the output current of the external circuit.

When the output current of the current regulation circuit reaches a dynamic output maximum, an input signal of an IS end of a resistor R197 and a resistor R198 of the positive input end (+ port) of the first operational amplifier U7B reaches a preset value at this moment, which means that a current value detected by the current detection module 610 reaches a predetermined threshold value, which meets expectations. This preset value/predetermined threshold value may also be understood as a reference voltage value, and the current regulation circuit enters a constant current state to work at this moment. And when an output voltage of an output end Ref of the second operational amplifier U7C continues to increase, an input voltage of a negative input end (-port) of the first operational amplifier U7B increases. When it exceeds a preset value (reference voltage value) of an input signal of the IS end, the current detection module 610 detects that the output current of the external circuit exceeds a predetermined threshold value and determines that an abnormality is detected, and the current regulation circuit will enter the overcurrent protection state.

In addition, the positive input end(+port) of the first operational amplifier U7B may also input a complementary signal for a current signal by using an IOSEN signal at an input end of a resistor R260 and a resistor R262, and the main function is to reduce an interference in a constant current working state and an overcurrent protection mode and reduce a system malfunction. In other words, only the IS end may be used for a current detection, and at this time only the IS end is connected with the external circuit to detect the output current of the external circuit. Or the IOSEN end and the IS end may be used to be matched with each other to detect the output current of the external circuit, so that the current signal during detection is cleaner.

It may be seen that the current regulation circuit of the disclosure takes the circuit including the first operational amplifier U7B as a main circuit and the circuit including the second operational amplifier U7C as an auxiliary circuit, which can not only realize a dynamic linear regulation function of output current, but also realize an output constant current control function and the output overcurrent protection function.

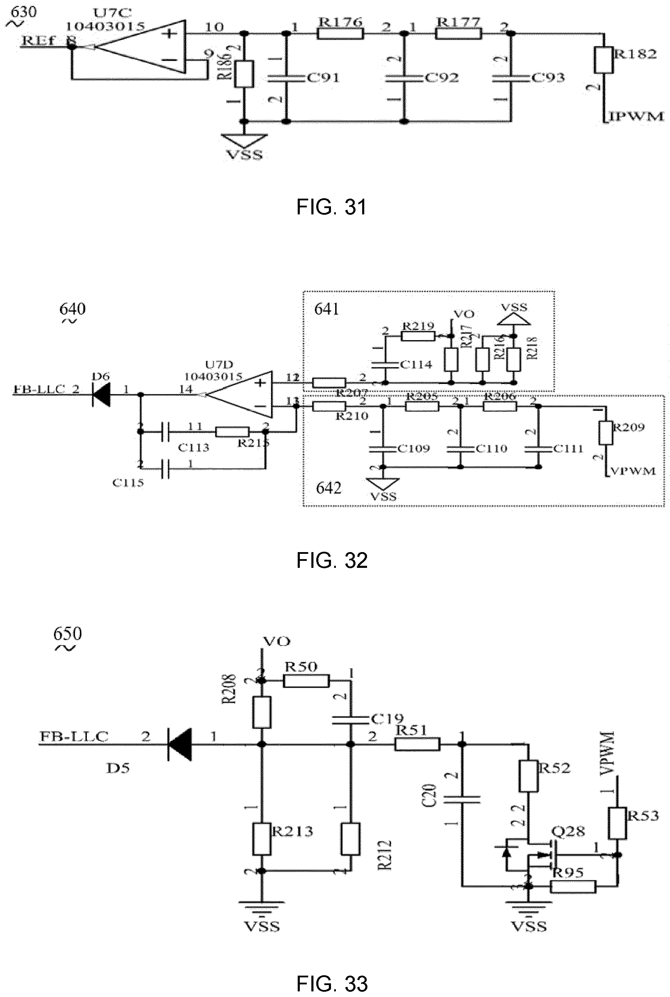

Please refer to FIG. 32 and FIG. 33. The voltage regulation circuit includes the voltage input end VPWM, the voltage output end FB-LLC and the first voltage control module 640 and the second voltage control module 650 connected between the voltage input end VPWM and the voltage output end FB-LLC. Wherein, the first voltage control module 640 and the second voltage control module 650 are connected in parallel with each other to be switched to work under a static work and the dynamic work, and regulate the output voltage of the voltage output end FB-LLC.

The voltage input end VPWM is configured to be capable of receiving digital signals, and the voltage output end FB-LLC is capable of outputting voltage to a main control chip.

The first voltage control module 640 includes a third operational amplifier U7D, a no-load voltage input module 641 connected with a positive input end (+port) of the third operational amplifier U7D and a second linear voltage input module 642 connected with a negative input end (-port) of the third operational amplifier U7D. When working statically, an output voltage of the first voltage control module 640 is a no-load voltage output by the no-load voltage input module 641, and when working dynamically, the output voltage of the first voltage control module 640 is inversely proportional to an output voltage of the second voltage control module 650.

In an embodiment, the no-load voltage input module 641 includes a power supply input end VO connected with an external power supply, a voltage dividing circuit connected with the power supply input end VO and a fourth resistor R207 connected between the voltage dividing circuit and a positive input end of the third operational amplifier U7D. The power supply input end VO usually receives an output voltage of the power supply or the charger. The voltage dividing circuit includes a resistor R217 connected to the power supply input end VO, a resistor R219 and a capacitor C114 connected in parallel with the resistor R217, and a resistor R216 and a resistor R218 connected to the ground VSS. The resistor R216 and the resistor R218 are connected in parallel with each other. In a static working mode, first the power supply input end VO and the ground VSS form an input reference signal through the voltage dividing circuit including input resistors R219/R217/R216/R218. At this time, a state of the voltage output end FB-LLC is a pulse signal of an unchanged amplitude. A signal given to the third operational amplifier U7D is unchanged at this time, so an output voltage of the third operational amplifier U7D is also unchanged, and the voltage is usually set to a highest output voltage of the product when presetting, which means a nominal voltage, or may also be called as the no-load voltage.

The second linear voltage input module 642 is used for converting a received input digital signal into the analog voltage signal and transmitting it to the negative input end of the third operational amplifier U7D. This second linear voltage input module 642 is similar to the first linear voltage input module 630 above, and includes a resistor R209 connected with the voltage input end VPWM, a resistor R206, R205 and R210 connected between a negative input end of resistor R209 and a negative input end of U7D. After the voltage input end VPWM receives the digital signal, it undergoes a digital-to-analog conversion through R209, R206, R205 and R210 to form an analog voltage signal and transmits it to the negative input end of the third operational amplifier U7D in order to output a linear voltage.

The negative input end of the third operational amplifier U7D is further connected with a capacitor C109, a capacitor C110 and a capacitor C111. Wherein, a first end of the capacitor C109 is connected between the resistor R210 and the resistor R205, and a second end of the capacitor C109 is connected to the ground VSS. A first end of the capacitor C110 is connected between the resistor R205 and the resistor R206, and a second end of the capacitor C110 is connected to the ground VSS. A first end of the capacitor C111 is connected between resistor R206 and the resistor R209, and a second end of the capacitor C111 is connected to the ground VSS. Arrangements of the resistor R209, the resistor R206, the resistor R205, and the resistor R210, as well as the capacitor C109, the capacitor C110, and the capacitor C111, may be used to calculate or adjust a linear voltage output by the third operational amplifier U7D.

When entering a dynamic working mode, since an input signal of the resistor R210/R205/R206/R209 of the negative input end (-port) of the third operational amplifier U7D is changed, an analog voltage signal of the negative input end(-port) of the third operational amplifier U7D is changed. When a VPWM signal duty cycle is larger, an output signal of the voltage output end FB-LLC is weaker, so that the first voltage control module 640 is forcibly removed and the second voltage control module 650 is transferred to work.

When the first voltage control module 640 is forcibly removed, it is equivalent that a no-load voltage feedback system (overvoltage protection) is removed. At the same time, since the VPWM signal is multiplexed, the second voltage control module 650 including the components D5/R208/R50/C19/R213/R212/R51/C20/R52/R95/R53 and Q28 is switched into the system at this time. The system regulates the VPWM duty cycle according to an actual value of the output voltage of the second voltage control module 650, and a dynamic output voltage regulation may be completed. In some embodiments, an output voltage of the second voltage control module 650 is greater than or equal to the output voltage of the first voltage control module 640.

A specific circuit of the second voltage control module 650 is shown in FIG. 33. It may be seen from this circuit that: when regulating the VPWM signal, a MOS switch Q28 is changed, and then the output voltage of the output end FB-LLC is changed.

It should be noted that, a signal of the output end FB-LLC of the third operational amplifier U7D in the disclosure and a signal of the output end FB-LLC of the second voltage control module 650 in the disclosure are opposite, and are also complementary. When a dynamic regulation circuit including the second voltage control module 650 works abnormally, a static regulation circuit including the first voltage control module 640 is switched into the work immediately, completes a protection and an output limiting, which greatly increases reliability and safety.

It should be further noted that, since the output voltage of the second voltage control module 650 is greater than or equal to the output voltage of the first voltage control module 640, when the output current of the first voltage control module 640 does not meet requirements, for example: when full loading or when an ultra-low voltage outputting, the current is difficult to control, the first voltage control module 640 needs to be removed at this moment, the second voltage control module 650 is switched in, and a dynamic voltage is regulated by the second voltage control module 650. A switching between the first voltage control module 640 and the second voltage control module 650 is automatically performed according to the digital signal of the VPWM end, and an ultimate purpose is to ensure that a protection state may be quickly entered, so that the current can be output stably, and an output of a wider voltage can also be realized.

In summary, the disclosure utilizes the complete current-voltage linear control circuit to regulate the output voltage and output current at the same time, so that when a voltage or current control function fails, a whole circuit will automatically fail, and only an output overvoltage protection function will be retained after the failure. At the same time, the output current will be limited to half of a nominal output current, so that even if the output current and voltage cannot be dynamically regulated, certain most basic functions can be retained to provide a device to be used in an emergency.

In addition, the disclosure uses the first voltage control module 640 and the second voltage control module 650 which are two completely independent module circuits to make complementary circuits with similar functions through the input signals VPWM, an external circuit configuration and an introduction of a working principle of a logic gate circuit, which improves a circuit redundancy, so that an output protection circuit design may be more flexible and reliable when designing a high-power power supply or charger, especially for some digitally controlled power supply chargers, and it can also reduce a possibility of out-of-control output defects of products using the circuit of this disclosure by 50%.

When the circuit of the disclosure is applied to a new energy electric vehicle charger and charging pile, one circuit with two or more uses may be realized without adding additional circuits, and a reliability and safety in a charging process may be greatly improved.

In summary, the current-voltage linear control circuit of the disclosure combines the current regulation circuit and the voltage regulation circuit into one, so that the current-voltage linear control circuit may be utilized to realize a regulation function of voltage and current simultaneously, and at least the functions of the overvoltage protection, the overcurrent protection, the output current control, the output voltage control and the constant current control can be realized simultaneously, which improves the reliability of the circuit and the timeliness of circuit protection control.

The above description is only a preferred embodiment of the disclosure and an explanation of the technical principle used. Those skilled in the art should understand that a disclosure scope involved in this disclosure is not limited to the technical solutions formed by the specific combination of the above technical features. At the same time, it should also cover other technical solutions formed by any combination of the above technical features or their equivalent features without departing from a concept of the disclosure, such as a technical solution formed by replacing the above-mentioned features with technical features with similar functions disclosed in (but not limited to) this disclosure.

Except for the technical features described in the specification, the remaining technical features are known to those skilled in the art, in order to highlight the innovative features of the disclosure, the remaining technical features will not be repeated herein.

## Claims

1. A battery pack, comprising:
a box;
a plurality of battery modules arranged in the box at intervals;
a cooling passage formed between the plurality of battery modules arranged at intervals and the box;
an air inlet assembly and an air outlet assembly arranged on the box corresponding to a head and a tail end of the cooling passage, so as to enable outside air to flow into the box from an inlet of the air inlet assembly and out of the box from an outlet of the air outlet assembly; and
a cooling assembly arranged on at least a partial path where air flows between the inlet of the inlet air assembly and the box, wherein the air flowing in through the inlet of the air inlet assembly is in contact with the cooling assembly.

2. The battery pack according to claim 1, wherein the cooling assembly comprises a semiconductor refrigeration plate, the semiconductor refrigeration plate is mounted on at least a partial path where air flows between the inlet of the air inlet assembly and the box.

3. The battery pack according to claim 2, wherein the cooling assembly further comprises a heat sink, an air gap is evenly distributed on the heat sink, and the air gap is at least partially communicated with an internal space of the box, so that air flowing in from the air inlet assembly flows into the box through the air gap.

4. The battery pack according to claim 3, wherein the heat sink comprises a plurality of fins arranged at intervals, the air gap is formed between the adjacent two fins, a distance between the adjacent two fins ranges between 1mm and 2cm, and a thickness of the fin ranges between 0.5mm and 5mm.

5. The battery pack according to claim 1, wherein the air inlet assembly comprises an air inlet cover mounted on an outer side of the box, a lower end face of the air inlet cover parallel to a bottom surface of the box is configured as an air inlet, an angle is formed between the air inlet and a vertical direction, and a range of the angle ranges between 20° and 80°.

6. The battery pack according to claim 1, wherein the air outlet assembly comprises: at least one centrifugal fan, arranged on the box corresponding to the tail end of the cooling passage, and each centrifugal fan acting on at least one cooling passage.

7. The battery pack according to claim 1, wherein a ratio of a center of gravity height of the battery pack to a total height of the battery pack ranges from 40% to 60%.

8. The battery pack according to claim 7, wherein the height of the battery pack ranges from 150mm to 250mm.

9. The battery pack according to claim 7, wherein an energy density of a battery cell in the battery pack is greater than 185Wh/kg.

10. The battery pack according to claim 7, wherein an energy density of the battery pack is greater than 135Wh/kg.

11. The battery pack according to claim 1, wherein the battery pack further comprises a control system, the control system comprises:
a BMS module provided with an on-board switch;
a DC/DC module connected with the BMS module, wherein the DC/DC module is configured to receive an enabling signal of the battery pack and activate the BMS module based on the enabling signal; and
a key switch connected with the BMS module, the DC/DC module and the battery pack, wherein the key switch comprises an OFF end, a START end and an ACC end, wherein
when switched to the START end through a key, the START end is connected with the battery pack, the battery pack provides the enabling signal for the DC/DC module, activates the BMS module through the enabling signal, and closes the on-board switch, and the BMS module controls the battery pack;
when switched to the ACC end through the key, the ACC end is connected with the battery pack, and the BMS module controls the battery pack;
when switched to the OFF end through the key, the on-board switch is disconnected.

12. The battery pack according to claim 11, wherein the control system further comprises a total positive relay, a charging relay and a total negative relay, the total positive relay and the charging relay are respectively connected with a positive electrode of the battery pack, the total negative relay is connected with a negative electrode of the battery pack, and the BMS module controls the charging and discharging of the battery pack by controlling the total positive relay, the charging relay and the total negative relay.

13. The battery pack according to claim 12, wherein the charging relay comprises a fast-charging relay and a slow-charging relay, the fast-charging relay and the slow-charging relay are respectively connected with the positive electrode of the battery pack, and the BMS module controls the battery pack to enter fast-charging mode and slow-charging mode by controlling the opening and closing of the fast-charging relay and the slow-charging relay.

14. The battery pack according to claim 11, wherein the control system further comprises a heating film and a heating relay, the heating film is arranged on the battery pack, a positive electrode and a negative electrode of the heating film are respectively connected with the positive and negative electrodes of the battery pack, and the heating relay is connected with the positive electrode of the heating film.

15. The battery pack according to claim 11, wherein the control system further comprises a shunt, the shunt is connected with a negative electrode of the battery pack and the BMS module, and the BMS module controls the opening and closing of the on-board switch based on an output current of the battery pack detected by the shunt.

16. The battery pack according to claim 1, wherein the battery module comprises:
a battery cell cluster comprising a plurality of battery cells electrically connected with each other, wherein the plurality of electrically connected battery cells is stacked in a same direction;
at least one group of end plates, wherein each group of end plates is arranged on two opposite sides of the battery cell cluster and connected with side walls of the battery cell cluster that are in contact with the end plates, wherein each end plate is configured with at least one limiting part parallel to a top or a bottom of the battery cell cluster; and
at least one limiting belt arranged around outer sides of the battery cell cluster and the end plate, wherein the limiting belt is in contact with the limiting part and supported by the limiting part.

17. The battery pack according to claim 16, wherein the end plate is configured with at least one first limiting component and at least one second limiting component, the first limiting component is arranged on the end plate along a transverse direction or a longitudinal direction, the second limiting component and the first limiting component are arranged at intervals, the second limiting component and the first limiting component form the limiting part, and an inclined plane is arranged on one side of the second limiting component away from the first limiting component.

18. The battery pack according to claim 17, wherein the first limiting component and/or the second limiting component is configured as a limiting rib and/or a limiting block, wherein
when the first limiting component and the second limiting component are both configured as limiting ribs, the two limiting ribs are arranged in parallel with each other;
when the first limiting component and the second limiting component are both configured as limiting blocks, the limiting block of the first limiting component and the limiting block of the second limiting component are arranged in alignment or in dislocation;
when the first limiting component and the second limiting component are respectively configured as the limiting block and the limiting rib, the limiting block is arranged at intervals along the transverse direction, and the limiting rib is arranged along the transverse direction or along the longitudinal direction to correspond to the limiting block.

19. A mower comprising a battery pack electrically connected with the mower, wherein the battery pack comprises:
a box;
a plurality of battery modules arranged in the box at intervals;
a cooling passage formed between the plurality of battery modules arranged at intervals and the box;
an air inlet assembly and an air outlet assembly arranged on the box corresponding to a head and a tail end of the cooling passage, so as to enable outside air to flow into the box from an inlet of the air inlet assembly and flow out of the box from an outlet of the air outlet assembly; and
a cooling assembly arranged on at least a partial path where air flows between the inlet of the inlet air assembly and the box, wherein the air flowing in through the inlet of the air inlet assembly is in contact with the cooling assembly.

20. The mower according to claim 19, wherein a ratio of a center of gravity height of the battery pack to a total height of the battery pack ranges from 40% to 60%.
